# NEUE EUROPÄISCHE PATENTSCHRIFT

(11) **EP 1 353 975 B2**
(45) Veröffentlichungstag und Bekanntmachung des Hinweises auf die Entscheidung über den Einspruch: **01.09.2010**
(45) Hinweis auf die Patenterteilung: 11.01.2006
(21) Anmeldenummer: 01990467.1
(22) Anmeldetag: 01.12.2001
(51) Int. Cl.: C08J 3/03

(54) **VERFAHREN ZUR HERSTELLUNG VON WASSER-IN-WASSER-POLYMERDISPERSIONEN**
METHOD FOR THE PRODUCTION OF WATER-IN-WATER POLYMER DISPERSIONS
PROCEDE DE PRODUCTION DE DISPERSIONS POLYMERES EAU-DANS-EAU

(30) Priorität: 08.12.2000 DE 10061483
(43) Veröffentlichungstag der Anmeldung: 22.10.2003
(73) Patentinhaber: Ashland Licensing and Intellectual Property LLC, Dublin, OH 43017 (US)
(72) Erfinder: FISCHER, Ulrich, 41468 Neuss (DE); SCHROERS, Otto, 47803 Krefeld (DE); WOEBEL, Wolfgang, 47877 Willich (DE)
(74) Vertreter: Kutzenberger, Helga
(86) Internationale Anmeldenummer: PCT/EP2001/014062
(87) Internationale Veröffentlichungsnummer: WO 2002/046275

(56) Entgegenhaltungen:
- EP-A- 0 524 513
- EP-A- 0 630 909
- EP-A- 0 831 177
- WO-A-00/61501
- WO-A-98/31748
- WO-A-98/54234
- AU-B- 9 457 574
- DE-A- 19 851 024
- US-A- 5 597 859
- US-A- 5 962 570

## Beschreibung

Die vorliegende Erfindung betrifft Verfahren zur Herstellung von Wasser-in-Wasser-Polymerdispersionen enthaltend ein feinverteiltes, wasserlösliches oder wasserquellbares Polymerisat A und eine kontinuierliche wäßrige Phase enthaltend ein polymeres Dispergiermittel B, die dadurch erhältlichen Wasser-in-Wasser-Polymerdispersionen und deren Verwendung als Hilfsmittel bei der Papierherstellung oder als Flockungsmittel bei der Sedimentation von Feststoffen.

Die Herstellung von Wasser-in-Wasser-Polymerdispersionen wird im Stande der Technik wiederholt beschrieben. Dabei wird im wesentlichen angestrebt, besser handhabbare Wasser-in-Wasser-Dispersionen zu erhalten. So ist aus der internationalen Anmeldung WO 98/14405 bekannt, daß durch Zugabe einer Mischung aus einem kosmotropen und einem chaotropen bzw. einem anionischen, organischen Salz bei der Herstellung der dispergierten Polymerkomponente die Viskosität der Wasser-in-Wasser-Dispersionen gesenkt werden kann.

In der internationalen Anmeldung WO 98/31748 werden Wasser-in-Wasser-Dispersionen beschrieben, die stabil und trotz eines relativ hohen Anteils an dispergierten Polymeren gießbar sind, sofern bei der Herstellung der Wasser-in-Wasser-Dispersionen ein wasserlösliches, anorganisches Salz in Mengen von wenigstens 10 Gew.% vor der Polymerisation der dispergierten Monomerlösung zugegeben wird. Solche hohen Salzmengen sind für einige Einsatzzwecke der Wasser-in-Wasser-Dispersionen nicht akzeptabel.

In der internationalen Anmeldung WO 98/31749 werden Wasser-in-Wasser-Dispersionen beschrieben, die gießbar bleiben und keine irreversible Agglomeration bei Lagerung zeigen, sofern die Wasser-in-Wasser-Dispersionen bereits nach ihrer Herstellung aufgrund ihrer niedrigen Viskosität gießbar sind. Gemäß der Lehre dieser internationalen Anmeldung wird dies erreicht, indem man dem Dispersionsmedium, in dem die zu polymerisierende Monomerlösung vorliegt, eine Polyhydroxyverbindung hinzufügt. Die erhaltenen Wasser-in-Wasser-Dispersionen, die ggf. auch Salze enthalten können, müssen aber bei weiterer Verdünnung über ein bestimmtes Maß hinaus verdünnt werden, da sonst bei der Verdünnung ein unerwünscht hoher Anstieg der Brookfield-Viskosität gegenüber der noch nicht verdünnten Wasser-in-Wasser-Dispersion auftritt. Dies ist aber für die Anwendung der Wasser-in-Wasser-Dispersionen nachteilig.

In der europäischen Anmeldung EP-A-0 630 909 wird eine Herstellung von Wasser-in-Wasser-Dispersionen beschrieben, nach der der zu polymerisierenden, dispergierten Monomerlösung ein polyvalentes, anionisches Salz zur Viskositätsregelung in Mengen von mindestens 15 Gew.% zugesetzt wird. Weiteres Salz wird zusätzlich zur Verringerung der Viskosität der erhaltenen Wasser-in-Wasser-Dispersion zugegeben. Auch hier führt die hohe Salzmenge dazu, daß die Wasser-in-Wasser-Dispersionen nicht für alle Anwendungszwecke problemlos eingesetzt werden können.

Darüber hinaus können bei den aus dem Stand der Technik bekannten Wasser-in-Wasser-Dispersionen bei längerer Lagerung, insbesondere unter extremen Bedingungen wie Temperaturen über 25°C bis zu 50°C, Veränderungen, d. h. Beeinträchtigungen der vorteilhaften Eigenschaften der Wasser-in-Wasser-Dispersionen auftreten, die beispielsweise zu verlängerten Entwässerungszeiten führen.

Aufgabe der vorliegenden Erfindung war es daher, ein Verfahren zur Verfügung zu stellen, gemäß dem Wasser-in-Wasser-Polymerdispersionen erhalten werden, die auch nach einer Lagerung unter extremen Bedingungen, wie Temperaturen über 25°C bis zu 50°C, praktisch unveränderte Gebrauchseigenschaften aufweisen.

Erfindungsgemäß gelingt dies durch Bereitstellung von einem Verfahren zur Herstellung einer Wasser-in-Wasser Polymerdispersion enthaltend ein wasserlösliches und/ oder wasserquellbares Polymerisat A und polymeres, wasserlösliches Dispergiermittel B, gemäß dem die Monomeren, die in einer wäßrigen Phase enthaltend das wasserlösliche Dispergiermittel B verteilt sind, ggf. unter Zugabe eines wasserlöslichen Salzes einer radikalischen Polymerisation unterworfen werden und nach der Polymerisation der so erhaltenen Wasser-in-Wasser Dispersion eine wasserlösliche Säure zugesetzt wird, das dadurch gekennzeichnet ist, daß die Säure in Mengen von 0,1 - 5 Gew.%, das Salz in Mengen bis maximal 3 Gew.%, jeweils bezogen auf die Gesamtdispersion, und die Säure und das Salz insgesamt in Mengen von maximal 5 Gew.%, bezogen auf die Gesamtdispersion, zugesetzt werden, und das Dispergiermittel B ein kationisches Polymerisat ist, das aus wenigstens 30 Gew. % kationischem Monomer aufgebaut ist.

Vorzugsweise wird die Säure in Mengen von 0,2 bis 3,5 Gew.%, besonders bevorzugt in Mengen von 0,3 bis 2 Gew.%, bezogen auf die Gesamtdispersion, zugesetzt.

Sofern ein Salz bei der Herstellung der Wasser-in-Wasser-Polymerdispersion zum Einsatz kommt, wird dieses Salz vorzugsweise in Mengen bis maximal 2,0 Gew.%, besonders bevorzugt in Mengen von 0,5 bis 1,5 Gew.%, bezogen auf die Gesamtdispersion, zugesetzt. Dabei sollen die Mengen an zugesetzter wasserlöslicher Säure und dem ggf. zugesetzten wasserlöslichen Salz vorzugsweise maximal 3,5 Gew.%, bezogen auf die Gesamtdispersion, betragen.

Als Säure-Zusatz zu den erfindungsgemäß hergestellten Wasser-in-Wasser-Polymerdispersionen können wasserlösliche organische Säuren und/oder anorganische Säuren verwendet werden. Als organische wasserlösliche Säuren eignen sich insbesondere organische Carbonsäuren, Sulfonsäuren, Phosphonsäuren, vorzugsweise aliphatische oder aromatische Mono-, Di-, PolyCarbonsäuren und/oder Hydroxycarbonsäuren, vorzugsweise Essigsäure, Propionsäure, Zitronensäure, Oxalsäure, Bernsteinsäure, Malonsäure, Adipinsäure, Fumarsäure, Maleinsäure, Benzoesäure, ganz besonders bevorzugt Zitronensäure, Adipinsäure und/oder Benzoesäure. Als anorganische Säuren eignen sich wasserlösliche Mineralsäuren, vorzugsweise Salzsäure, Schwefelsäure, Salpetersäure und/oder Phosphorsäure. Ganz besonders bevorzugt wird Zitronensäure, Adipinsäure, Benzoesäure, Salzsäure, Schwefelsäure und/oder Phosphorsäure eingesetzt.

Zur Durchführung der erfindungsgemäßen Verfahren werden die Monomeren, vorzugsweise als wässrige Monomerlösung, in einer wässrigen Phase fein verteilt, die wenigstens ein polymeres Dispergiermittel B enthält. Diese polymeren Dispergiermittel sind relativ niedermolekular und weisen vorzugsweise ein durchschnittliches Molekulargewicht M_{w} von maximal 2,0 x 10⁶, vorzugsweise von 50 000 bis 1,2 x 10⁶ g / mol, gemessen nach der GPC-Methode (Gelpermeationschromatographie mit 1,5%iger Ameisensäure als Elutionsmittel gegen Pullulan-Standards), auf.

Diese polymeren Dispergiermittel weisen wenigstens eine der funktionellen Gruppen ausgewählt aus Ether-, Carboxyl-, Sulfon-, Sulfatester-, Amino-, Amido-, Imido-, tert.-Amino- und/oder quaternären Ammonium-Gruppen auf.

Beispielhaft sind hierfür Cellulosederivate, Polyvinylacetate, Stärke, Stärkederivate, Dextrane, Polyvinylpyrrolidone, Polyvinylpyridine, Polyethylenimine, Polyamine, Polyvinylimidazole, Polyvinylsuccinimide, Polyvinyl-2-methylsuccinimide, Polyvinyl-1,3-oxazolidone-2, Polyvinyl-2-methylimidazoline und/oder deren jeweilige Copolymerisate mit Maleinsäure, Maleinsäureanhydrid, Fumarsäure, Itakonsäure, ltakonsäureanhydrid, (Meth)acrylsäure, Salze der (Meth)acrylsäure und/oder (Meth)acrylsäureamid-Verbindungen, zu erwähnen.

Erfindungsgemäß werden als polymere Dispergiermrittel B kationische Polymerisate eingesetzt, die aus wenigstens 30 Gew%, vorzugsweise wenigstens 50 Gew.%, besonders bevorzugt 100 Gew.%, kationischen Monomereinheiten aufgebaut sind, die sich von kationischen, ethylenisch ungesättigten Monomeren ableiten, wie z. B. Diallyldimethylammoniumchlorid, Dialkylaminoalkyl(meth)acrylat oder -acrylamid mit 1 bis 3 C-Atome in den Alkyl- bzw. Alkylengruppen und protoniert oder quaterniert zu Ammoniumsalzen, vorzugsweise mit Methylchlorid quaternierte Ammoniumsalze von Dimethylaminoethyl(meth)acrylat, Dimethylaminopropyl(meth)acrylat, Dimethylamlnopropyl(meth)acrylamid, Dimethylaminohydroxypropyl(meth)acrylat. Ganz besonders bevorzugt wird für das erfindungsgemäße Verfahren Polydiallyldimethylammoniumchlorid als polymeres Dispergiermittel B eingesetzt.

In einer bevorzugten Ausführungsform der erfindungsgemäßen Verfahren wird das wasserlösliche, polymere Dispergiermittel B zusammen mit einem wasserlöslichen polyfunktionellen Alkohol und/oder dessen Umsetzungsprodukt mit Fettaminen eingesetzt. Dabei eignen sich insbesondere Polyalkylenglykole, vorzugsweise Polyethylenglykole, Polypropylenglykole, Blockcopolymere von Propylen/Ethylenoxid, mit Molekulargewichten von 50 bis 50 000, vorzugsweise 1 500 bis 30 000, niedermolekulare polyfunktionelle Alkohole wie Glycerin, Ethylenglykol, Propylenglykol, Pentaerythrit und/oder Sorbitol als polyfunktionelle wasserlösliche Alkohole und/oder deren Umsetzungsprodukten mit Fettaminen mit C₆-C₂₂ im Alkyl- oder Alkylenrest.

Die wässrige Phase, in der die Monomeren, vorzugsweise als wässrige Lösung, verteilt werden, muß genügend wasserlösliches polymeres Dispergiermittel B und ggf. polyfunktionellen Alkohol und/oder das genannte Umsetzungsprodukt enthalten, damit das sich während der Polymerisation bildende Polymerisat A verteilt bleibt, ein unkontrolliertes Wachsen der Polymerteilchen und/oder ein Agglomerieren der sich bildenden Polymerteilchen verhindert wird. Vorzugsweise wird das polymere Dispergiermittel B und die ggf. vorhandene weiteren Dispersionsmittelkomponenten in Mengen von 5 bis 50 Gew.%, vorzugsweise von 10 bis 20 Gew.%, bezogen auf die Gesamtdispersion, eingesetzt.

Bei Mitverwendung weiterer wasserlöslicher Dispersionsmittelkomponenten mit dem polymeren Dispergiermittel B sollte ein Gewichtsverhältnis des polymeren Dispergiermittels B zu diesen Komponenten von 1:0,01 bis 0,5, vorzugsweise 1:0,01 bis 0,3 eingehalten werden.

Die Monomeren, die in der das polymere Dispergiermittel B enthaltenen wässrigen Phase verteilt, vorzugsweise fein und homogen verteilt vorliegen, umfassen nichtionische, kationische und/oder amphiphile ethylenisch ungesättigte Monomere, wobei deren ggf. vorhandener Anteil an wasserunlöslichen Monomeren so gewählt wird, daß die Wasserlöslichkeit bzw. die Wasserquellbarkeit des nach der Polymerisation erhaltenen Polymerisats A nicht beeinträchtigt wird.

Die nach dem erfindungsgemäßen Verfahren hergestellten Polymerisate A sind hochmolekulare, aber dennoch wasserlösliche bzw. wasserquellbare Polymerisate mit einem durchschnittlichen Molekulargewicht M_{w}, gemessen nach der GPC-Methode, von > 1,0 x 10⁶ g/mol, wobei das durchschnittliche Molekulargewicht M_{w} des Polymerisats A immer größer als das des polymeren Dispergiermittels B ist.

Als nichtionische Monomere können zur Herstellung der Polymerisate A Verbindungen der allgemeinen Formel (I) 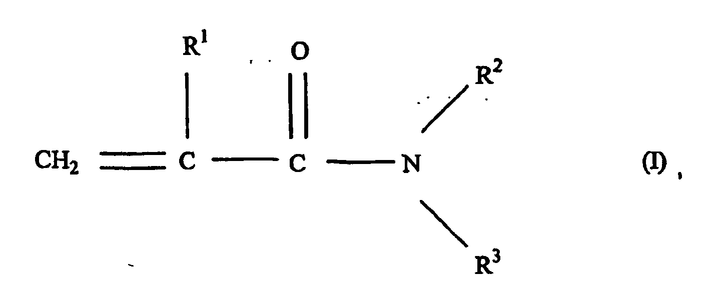 in der
- R¹: für einen Wasserstoff oder einen Methylrest, und
- R² und R³: ,unabhängig voneinander, für Wasserstoff, für einen Alkyl- oder Hydroxyalkyl-Rest mit 1 bis 5 C-Atomen
stehen,
eingesetzt werden. Vorzugsweise werden (Meth)acrylamid, N-Methyl(meth)acrylamid, N-Isopropyl(meth)acrylamid oder N,N-substituierte (Meth)acrylamide, wie N,N-Dimethyl(meth)acrylamid, N,N-Diethyl(meth)acrylamid, N-Methyl-N-ethyl(meth)acrylamid oder N-Hydroxyethyl(meth)acrylamid, ganz besonders bevorzugt Acrylamid, eingesetzt.

Als kationische Monomere zur Herstellung der Polymerisate A eignen sich Verbindungen der allgemeinen Formel (II) 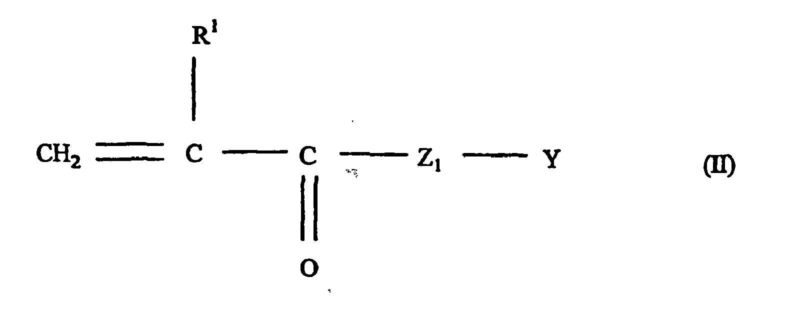 in der
- R¹: für Wasserstoff oder einen Methylrest,
- Z₁: für O, NH oder NR₄ mit R₄ für einen Alkylrest mit 1 bis 4 C-Atomen,
- Y: für eine der Gruppen 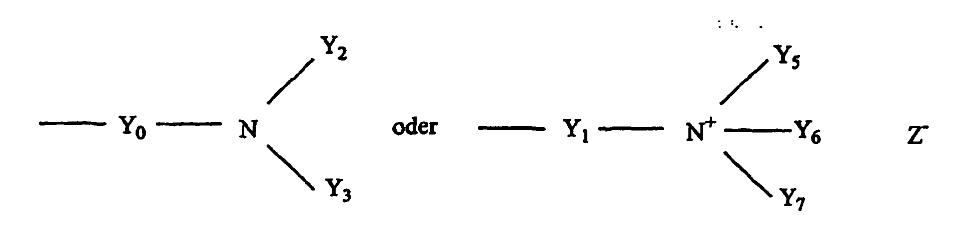
stehen und
wobei
Y₀ und Y₁ für einen gegebenenfalls mit OH-Gruppen substituierten Alkylenrest mit 2 bis 6 C-Atomen,
Y₂, Y₃, Y₄, Y₅, Y₆, Y₇, unabhängig voneinander, für einen Alkylrest mit 1 bis 6 C-Atomen,
Z⁻ für Halogen, Acetat, SO₄CH₃⁻ stehen.

Vorzugsweise sind protonierte oder quaternierte Dialkylaminoalkyl-(meth)acrylate oder -(meth)acrylamide mit C₁ bis C₃ in den Alkyl- bzw. Alkylengruppen, besonders bevorzugt das mit Methylchlorid quaternierte Ammoniumsalz von Dimethylaminoethyl(meth)acrylat, Dimethylaminopropyl(meth)acrylat, Dimethylaminoethyl(meth)acrylat, Diethylaminoethyl(meth)acrylat, Dimethylaminomethyl(meth)acrylat Dimethylaminoethyl(meth)acrylamid und/ oder Dimethylaminopropyl-(meth)acrylamid geeignet.

Als amphiphile Monomere eignen sich Verbindungen der allgemeinen Formel (III) oder (IV) 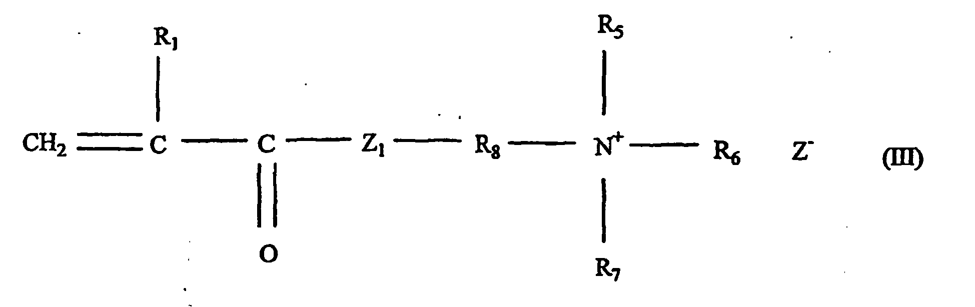 wobei
- Z₁: für O, NH, NR₄ mit R₄ für Alkyl mit 1 bis 4 Kohlenstoffatomen,
- R₁: für Wasserstoff oder einen Methylrest,
- R₈: für Alkylen mit 1 bis 6 Kohlenstoffatomen,
- R₅ und R₆: ,unabhängig voneinander, für einen Alkylrest mit 1 bis 6 Kohlenstoffatomen,
- R₇: für einen Alkyl-, Aryl- und/oder Aralkyl-Rest mit 8 bis 32 Kohlenstoffatomen und
- Z⁻: für Halogen, Pseudohalogen, SO₄CH₃⁻ oder Acetat
stehen oder 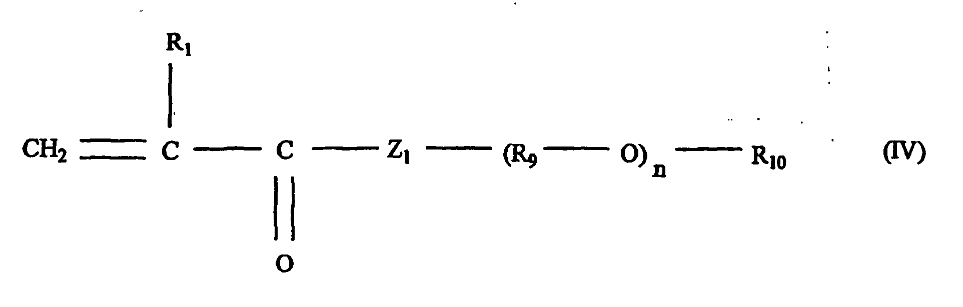 wobei
- Z₁: für O, NH, NR₄ mit R₄ für Alkyl mit 1 bis 4 Kohlenstoffatomen,
- R₁: für Wasserstoff oder einen Methylrest,
- R₁₀: für Wasserstoff, einen Alkyl-, Aryl- und/oder Aralkyl-Rest mit 8 bis 32 Kohlenstoffatomen,
- R₉: für einen Alkylenrest mit 2 bis 6 Kohlenstoffatomen
- und:
- n: für eine ganze Zahl von 1 und 50
stehen,
eingesetzt werden.

Vorzugsweise sind dies Umsetzungsprodukte von (Meth)acrylsäure mit Polyethylenglykolen (10 bis 40 Ethylenoxideinheiten), die mit Fettalkohol verethert sind, bzw. die entsprechenden Umsetzungsprodukte mit (Meth)acrylamid.

Vorzugsweise wird zur Herstellung des Polymerisates A eine Monomerzusammensetzung gewählt, die aus 1 bis 99 Gew.%, vorzugsweise aus 20 bis 80 Gew.%, jeweils bezogen auf die Gesamtmenge an Monomeren, kationischer Monomeren besteht. Ganz besonders bevorzugt wird zur Herstellung des Polymerisats A eine Mischung aus nichtionischen Monomeren, vorzugsweise Acrylamid und kationischen Monomeren der allgemeinen Formel II, vorzugsweise Dialkylaminoalkyl(meth)acrylate und/oder Dialkylaminoalkyl(meth)acrylamide, die quaterniert sind, eingesetzt. Ganz besonders bevorzugt wird Dimethylaminoethyl(meth)acrylat mit Methylchlorid quaterniert verwendet. Bei solchen Monomerzusammensetzungen beträgt der Anteil an kationischen Monomeren vorzugsweise wenigstens 20 Gew.%.

Die Monomeren werden, bezogen auf die Gesamtlösung bzw. auf die resultierende Gesamtdispersion, in einer Menge von 5 bis 60 Gew.-%, vorzugsweise 10 bis 50 Gew.-% in der wässrigen Phase, die mindestens ein Dispergiermittel B enthält, verteilt. Aus den Monomeren wird durch Polymerisation das hochmolekulare Polymerisat A gebildet.

Das polymere Dispergiermittel B und das Polymerisat A sind unterschiedlich, wobei der Unterschied durch physikalische Größen, wie unterschiedliche Molekulargewichte und/oder chemischen Aufbau, wie unterschiedliche Monomerzusammensetzung, gegeben sein kann.

Nach dem erfindungsgemäßen Verfahren wird die Polymerisation vorzugsweise in Gegenwart eines wasserlöslichen Salzes durchgeführt. Als wasserlösliches Salz können Ammonium-, Alkalimetall- und/oder Erdalkalimetallsalze, vorzugsweise Ammonium-, Natrium-, Kalium-, Kalzium- und/oder Magnesiumsalze eingesetzt werden. Solche Salze können Salze einer anorganischen Säure oder einer organischen Säure, vorzugsweise einer organischen Carbonsäure, Sulfonsäure, Phosphonsäure oder einer Mineralsäure sein. Vorzugsweise sind die wasserlöslichen Salze Salze einer aliphatischen oder aromatischen Mono-, Di-, Polycarbonsäure, einer Hydroxycarbonsäure, vorzugsweise der Essigsäure, Propionsäure, Zitronensäure, Oxalsäure, Bernsteinsäure, Malonsäure, Adipinsäure, Fumarsäure, Maleinsäure oder Benzoesäure oder Schwefelsäure, Salzsäure oder Phosphorsäure. Ganz besonders bevorzugt kommen als wasserlösliche Salze Natriumchlorid, Ammoniumsulfat und/oder Natriumsulfat zum Einsatz.

Die Zugabe des Salzes zu dem System kann vor der Polymerisation, während der Polymerisation oder nach der Polymerisation erfolgen. Bevorzugt ist die Zugabe des Salzes vor der Polymerisation der Monomeren.

Nach der Polymerisation wird der Wasser-in-Wasser Polymerdispersion eine wasserlösliche Säure in Mengen von 0,1 bis 5 Gew.%, vorzugsweise in Mengen von 0,2 bis 3,5 Gew.%, besonders bevorzugt in Mengen von 0,3 bis 2,0 Gew.%, jeweils bezogen auf die Gesamtdispersion, zugesetzt. Die Zugabe erfolgt vorzugsweise unter Rühren. Geeignete wasserlösliche Säuren sind organische Säuren und/oder anorganische Säuren, vorzugsweise organische Carbonsäuren, Sulfonsäuren, Phosphonsäuren oder Mineralsäuren.

Als organische Säuren eignen sich vorzugsweise Carbonsäuren, wie aliphatische oder aromatische Mono-, Di-, Poly-Carbonsäuren und/oder Hydroxycarbonsäuren, vorzugsweise Essigsäure, Propionsäure, Zitronensäure, Oxalsäure, Bernsteinsäure, Malonsäure, Adipinsäure, Fumarsäure, Maleinsäure, Benzoesäure, besonders bevorzugt Zitronensäure, Adipinsäure und/oder Benzoesäure, und als anorganische Säuren Salzsäure, Schwefelsäure und/oder Phosphorsäure. Besonders bevorzugt sind Zitronensäure, Adipinsäure und/oder Benzoesäure.

Zur Durchführung des erfindungsgemäßen Verfahrens wird die kontinuierliche wässrige Phase durch Auflösen oder Verdünnen des polymeren Dispergiermittels B, ggf. polyfunktionellem Alkohol und/oder einem entsprechenden Umsetzungsprodukt mit Fettaminen in Wasser und durch Verteilen der Monomeren bzw. deren wässrige Lösung nach bekannten Verteilungsmethoden, vorzugsweise durch Rühren, hergestellt.

Die Monomeren des Polymerisats A können als solche direkt in die kontinuierliche wässrige Phase eingebracht werden oder vorzugsweise als wässrige Monomerlösung.

Die Monomerlösung enthält im allgemeinen 5 bis 60 Gew.%, vorzugsweise 10 bis 50 Gew.%, bezogen auf die Gesamtlösung, Monomere und der restliche Anteil ist Wasser mit darin ggf. enthaltenen Hilfsstoffen, wie Chelatbildner. Zum Starten der Polymerisation werden beispielsweise radikalische Initiatoren, sogenannte Polymerisationsinitiatoren verwendet. Bevorzugt werden als radikalische Initiatoren Azoverbindungen, wie z. B. 2,2-Azobiisobutyronitril, 2,2-Azobis(2-amidinopropan)dihydrochlorid oder vorzugsweise Kaliumpersulfat, Ammoniumpersulfat, Wasserstoffperoxid, ggf. in Kombination mit einem Reduktionsmittel, wie z. B. einem Amin oder Natriumsulfit, eingesetzt. Die Initiatormenge, bezogen auf die zu polymerisierenden Monomeren, liegt im allgemeinen bei 10⁻³ bis 1 Gew.%, vorzugsweise 10⁻² bis 0,1 Gew.%. Die Initiatoren können zu Beginn der Polymerisation vollständig oder auch nur teilweise mit einer anschließenden Dosierung der Restmenge über den gesamten Polymerisationsverlauf zugegeben werden. Ebenso können die Monomeren oder die Monomerlösung vollständig oder teilweise am Beginn der Polymerisation im Dispergiermittel B verteilt werden, wobei der Rest der Monomeren oder der Monomerentösung in dosierten Teilmengen oder als kontinuierlicher Zulauf unter Verteilung über den gesamten Polymerisationsverlauf zugegeben wird. Darüber hinaus ist es auch möglich, die Herstellung der Wasser-in-Wasser Dispersionen gemäß Verfahren der EP-A-0 664 302 durchzuführen, deren entsprechende Offenbarung hiermit als Referenz eingeführt wird. Im wesentlichen wird bei dieser Verfahrensweise Wasser während der Polymerisation abgezogen und ggf. polymeres Dispergiermittel B zugegeben.

Die Polymerisationstemperatur beträgt im allgemeinen 0 bis 120°C, bevorzugt 50 bis 90°C. Vorzugsweise wird die Polymerisation so durchgeführt, daß das System mit Inertgas gespült und unter einer Inertgasatmosphäre, z. B. unter Stickstoffatmosphäre, polymerisiert wird. Der Polymerisationsumsatz bzw. das Ende der Polymerisation kann in einfacher Art und Weise durch Bestimmung des Restmonomergehaltes festgestellt werden. Die Methoden hierfür sind dem Fachmann bekannt.

Nach der Polymerisation kann es vorteilhaft sein, das Reaktionsgemisch abzukühlen, bevor die Säure, vorzugsweise unter Rühren der Dispersion, zugegeben wird.

Mit dem erfindungsgemäßen Verfahren gelingt es, Wasser-in-Wasser Dispersionen im allgemeinen in kurzen Herstellungszeiten zu erzeugen.

Die erfindungsgemäß erhältlichen Wasser-in-Wasser Polymerdispersionen haben den unerwarteten Vorteil, daß sie nicht nur nach ihrer Herstellung, d. h. ohne nennenswerte Lagerung, ggf. nach Verdünnung mit Wasser, ausgezeichnete Flockungsmittel bei der Sedimentation von Feststoffen, vorzugsweise bei der Wasser- und Prozeßwasser-Aufbereitung oder Abwasserreinigung oder bei der Rohstoffgewinnung, vorzugsweise von Kohle, Aluminium oder Erdöl, Hilfsmittel bei der Papierherstellung oder Demulgatoren bei Trennung von Öl- und/oder Fett-haltigen Wassergemischen, ausgezeichnete Verdickungsmittel, Retentions- und Entwässerungsmittel bei der Papierherstellung und/oder Zusatzmittel für Pflanzenschutzmittel ggf. zusammen mit anderen biologisch wirksamen Stoffen oder Erosionsschutzmittel sind. Die erfindungsgemäß erhältlichen Wasser-in-Wasser Dispersionen zeigen diese hervorragende Wirksamkeit auch bei längerer Lagerung unter Extrembedingungen, wie z. B. erhöhte Temperatur, d. h. Temperaturen über 25°C bis maximal 50°C, praktisch unverändert. Dieser Qualitätserhalt der erfindungsgemäß erhältlichen Dispersionen ist eine bisher unerfüllte Forderung der anwendenden Industrie und u. a. unverzichtbar, sofern diese Dispersionen in Regionen mit extremen klimatischen Bedingungen verbracht und eingesetzt werden sollen.

### Methoden

### 1. Bestimmung der Lösungsviskosität

Zur Bestimmung der Lösungsviskosität der erfindungsgemäß hergestellten Wasser-in-Wasser Dispersionen wird eine 5 Gew.%ige, bezogen auf die Wasser-in-Wasser-Polymerdispersion, Lösung in VE-Wasser, hergestellt. Für die Messung werden 340 g der 5%igen Lösung benötigt. Hierzu wird die notwendige Menge an vollentsalztem Wasser (VEW) in einem 400 ml Becherglas vorgelegt. Anschließend wird das vorgelegte Wasser mit einem Fingerrührer so intensiv gerührt, daß sich ein Kegel bildet, der bis zum Boden des Becherglases reicht. Die für die Herstellung der 5%igen Lösung notwendige Menge an Wasser-in-Wasser Dispersion wird mittels einer Einmalspritze in das vorgelegte, gerührte Wasser als Einmaldosis eingebracht. Die Lösung wird anschließend bei 300 Upm (±10 Upm) eine Stunde lang gerührt. Nach einer Standzeit von 10 Minuten wird die Brookfield Viskosität mit Hilfe eines Brookfield-Viskosimeter RVT-DV 11 mit einer Spindel 2 bei Geschwindigkeit 10 bestimmt.

### 2. Bestimmung der Salzviskosität

In einem 400 ml Becherglas werden 289 g vollentsalztes Wasser eingewogen. Anschließend wird das vorgelegte Wasser mit einem Fingerrührer so intensiv gerührt, daß sich ein Kegel bildet, der bis zum Boden des Becherglases reicht. 17 g der erfindungsgemäß hergestellten Wasser-in-Wasser Dispersion werden mittels einer Einmalspritze als Einmaldosis in das vorgelegte, gerührte Wasser eingebracht. Nachdem sich die Wasser-in-Wasser Dispersion gelöst hat, werden 34 g Natriumchlorid (technisch) eingestreut. Die Lösung wird 60 Minuten bei 300 ± 10 Upm. gerührt und danach für weitere 10 Minuten stehen gelassen. Anschließend wird die Brookfield Viskosität mit Hilfe eines Brookfield-Viskosimeter RVT-DV II mit Spindel 1 bei Geschwindigkeit 10 bestimmt.

### 3. Bestimmung des Flockungswertes mittels "Stammberge"-Trübe

Nach dieser Methode wird die Sedimentationszeit bestimmt, die der geflockte Feststoff bei der Feststoff-Flüssigkeits-Trennung durch Sedimentation benötigt, um durch eine angegebene Strecke der Flüssigkeitssäule zu sedimentieren. Zur Durchführung der Methode wird auf die Veröffentlichung von J. Reuter in "Umwelt" 1/1981/ Seite 27 - 35 verwiesen.

Für die Messung wird zunächst eine Dispersion aus folgenden Stoffen hergestellt :

Als Feststoff wird Blauton HFF-Spezial ca. 37% Al₂O₃ > 95% unter 2 µm (Tonwerke Braun Witterschlick / Bonn) verwendet, der in Krefelder-Leitungswasser (oder synthetisches Leitungswasser mit 25 ° dH ) dispergiert wird.

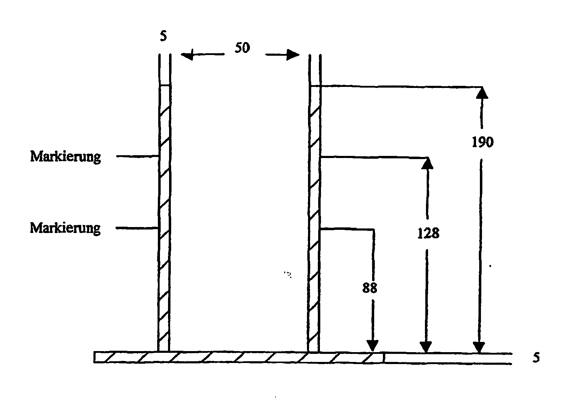

Dazu werden 1000 ml Leitungswasser 18 g Blauton zugesetzt.
Anschließend wird mit einem Mixer ( 10 000 ± 100 Upm ) 20 Sekunden dispergiert.
Die entstandene Dispersion wird in einen genormten Prüfzylinder ( siehe Figur 1 ) bis zur oberen Messmarke gefüllt.
Der Prüfzylinder hat zwei Messmarken im Abstand von 40 mm, ist aus Plexiglas und faßt bis zur oberen Markierung 250 ml. Die Zahlenangaben in Figur 1 sind in mm.

Vorbereitung der Wasser-in-Wasser Dispersion für die Bestimmung des Flockungswertes:

Die zu prüfenden Wasser-in-Wasser Dispersionen werden entsprechend ihrem Polymergehalt (Polymerisat A und polymeres Dispergiermittel B) mit Leitungswasser auf einen Polymergehalt von 0,01 Gew.% verdünnt.

Zur Messung des Flockungswertes wird der mit der vorstehend beschriebenen Tondispersion gefüllte Prüfzylinder unter einen Fingerrührer gestellt. Unter Rühren (320 Upm ) werden 2,5 ml Aluminiumsulfatlösung ( 200 g Al₂(SO₄)₃ x 18 H₂O / Liter destilliertes Wasser ) zugesetzt und anschließend werden 5 ml der vorstehend beschriebenen 0,01 %igen Polymerlösung innerhalb von 15 Sekunden zudosiert, in weiteren 5 Sekunden wird der Rührer ausgeschaltet. Es zeigt sich nun eine Flockung ( Agglomeration ) der Blautondispersion, die schnell sedimentiert. Nachdem die Tonflocken die (1.) obere Messmarke des Prüfzylinders erreicht haben, wird die Zeitmessung gestartet. Die Zeit bis zum Erreichen der unteren (2.) Messmarke wird als Flockungswert in Sekunden bezeichnet.

Je kleiner der Flockungswert ist, umso vorteilhafter ist die Wirkung des Flockungsmittels.

### 4. Bestimmung der Entwässerungsbeschleunigung mit dem Mahlgrad Prüfgerät nach Schopper Riegler

Die Untersuchungsmethode ist von H. Becker und D. Zerler in der Schriftenreihe der Papiermacherschule Bd. 15, 1. Aufl. 1995, S. 68 - 71, beschrieben.
Nach dieser Meßmethode wird die Entwässerungsbeschleunigung durch Zugabe von Wasser-in-Wasser Dispersionen zu definierten Papierstoffsuspensionen mit Hilfe eines Mahlgradprüfgerätes nach Schopper Riegler (Firma Haage) bestimmt.

Dazu werden Wasser-in-Wasser Dispersionen jeweils mit vollentsalztem Wasser auf einen Polymergehalt (Polymerisat A und polymeres Dispergiermittel B) von 0,01 Gew.% eingestellt. Als Entwässerungsgerät dient das angegebene Schopper Riegler Gerät, das einen 2000 ml fassenden Metallbecher mit einem Sieb an der Unterseite umfaßt, das beim Befüllen mit einem Kegel abgedichtet wird.

Die Bestimmung der Entwässerungsbeschleunigung wird an einer 1 Gew.%igen Stoff-Suspension aus Standard-Altpapier durchgeführt.

Hierzu werden 3 g atro Altpapierfasem mit Leitungswasser auf 300 g einer 1 Gew.%igen Stoff-Suspension in dem Schopper Riegler Mahlgradbecher eingestellt. Das oben beschriebene Entwässerungsbeschleunigungsmittel aus einer Wasser-in-Wasser Dispersion wird auf eine 0,01 Gew.%iger Lösung eingestellt. Die Entwässerungsversuche werden bei 3 Polymerkonzentrationen durchgeführt, wobei jeweils von dem 0,01 Gew.%igen Entwässerungsmittel 3 ml, 6 ml bzw. 9 ml mit jeweils 200 ml Leitungswasser verdünnt und diese Lösung der Papierfaser-Suspension in den Schopper Riegler Mahlgradbecher gegeben und jeweils mit Leitungswasser auf 1 000 ml aufgefüllt werden. Der Inhalt des Bechers wird dann in die Füllkammer des unten geschlossenen Schopper Riegler Gerätes überführt und der Dichtungskegel sofort entarretiert. Es wird die Zeit gemessen, die benötigt wird, um von der 1 000 ml Papierfaser-Suspension nach der Öffnung der Kegeldichtung eine Filtrationsmenge von 700 ml abzufiltrieren. Dazu wird das Filtrat aufgefangen und die Zeit bis zum Erreichen von 700 ml gestoppt. Diese Zeit wird als Entwässerungszeit bezeichnet.

### Beispiele

In den nachfolgenden Beispielen wurden die Lösungs- bzw. Salzviskosität, der Flockungswert und die Entwässerungswirkung nach den vorstehend angegebenen Methoden bestimmt. Unter dem Begriff Lösung wird immer eine wässrige Lösung verstanden.

### Beispiel 1

231,0 g Acrylamidlösung (50%ig), 231,1 g vollentsalztes Wasser (VEW), 43,2 g Dimethylaminoethylacrylat mit Methylchlorid quaterniert (80%ig), 9,5 g Ammoniumsulfat technisch, 0,2 g des Natriumsalzes der Diethylentriaminpentaessigsäure (40%ig), 400 g Polydiallyldimethylammoniumchlorid (40%ig), 14,25 g Polyethylenglykol mit einem Molekulargewicht von 9 000 bis 12 000 und 5 g 2,2-Azobis(2-amidinopropan)dihydrochlorid werden in einem 2 I-Kolben, versehen mit Rührer, Stickstoffzuleitung und Anschluss an eine Vakuumpumpe eingebracht und unter Rühren homogen verteilt. Der Kolben wurde ca. 10 Minuten durch Anschluß an eine Vakuumpumpe entlüftet und danach die Mischung zur Entfernung des verbliebenen Sauerstoffs mit Stickstoff ca. 15 Minuten ausgeblasen. Unter Rühren bei 100 - 150 UpM wird die Mischung zur Polymerisation der Monomeren auf 35 °C erwärmt. Nachdem eine maximale Temperatur von 75 °C erreicht ist, wird 15 Minuten kurz nachgerührt. Anschließend werden 10 g Zitronensäure als feines Pulver eingestreut und durch Rühren mit der Dispersion vermischt. Nach 20 Minuten fortdauemdem Rühren wird die erhaltene Wasser-in-Wasser Dispersion auf 20 °C abgekühlt.

Die Lösungsviskosität der Wasser-in-Wasser Dispersion wurde, wie oben angegeben, mit 60 mPa · s bestimmt. Die Salzviskosität, ebenfalls wie oben angegeben, betrug 36 mPa · s.

### Vergleichsbeispiel 1

Es wurde Beispiel 1 wiederholt mit dem Unterschied, dass es zu keinem Zeitpunkt Zitronensäure zugegeben wurde.

Von der so erhaltenen Wasser-in-Wasser Dispersion wurden deren Lösungsviskosität 5 %, wie oben angegeben, mit 52 mPa · s und deren Salzviskosität mit 32 mPa·s bestimmt.

### Beispiel 2

231,0 g Acrylamidlösung (50%ig), 231,1 g vollentsalztes Wasser (VEW), 43,2 g Dimethylaminoethylacrylat mit Methylchlorid quaterniert (80%ig), 9,5 g Ammoniumsulfat technisch, 0,2 g des Natriumsalzes der Diethylentciaminpentaessigsäure (40%ig), 400 g Polytrimethammoniumpropylacrylamid-chlorid (40%ig), 14,25 g Polyethylenglykol mit einem Molekulargewicht von 9 000 bis 12 000 und 4 g 2,2-Azobis(2-amidinopropan)dihydrochlorid werden in einem 2 I-Kolben, versehen mit Rührer, Stickstoffzuleitung und Anschluss an eine Vakuumpumpe eingebracht und unter Rühren verteilt. Der Kolben wurde ca. 10 Minuten durch Anschluß an eine Vakuumpumpe entlüftet und danach die Mischung zur Entfernung des verbliebenen Sauerstoffs mit Stickstoff ca. 15 Minuten ausgeblasen. Unter Rühren bei 100 - 150 UpM wird die Mischung zur Polymerisation der Monomeren auf 35 °C erwärmt. Nachdem eine maximale Temperatur von 76 °C erreicht ist, wird 15 Minuten nachgerührt. Anschließend werden 10 g Zitronensäure als feines Pulver eingestreut und durch Rühren mit der Dispersion vermischt. Nach 35 Minuten fortdauemdem Rühren wird die erhaltene Wasser-in-Wasser Dispersion auf 20 °C abgekühlt.

Die Lösungsviskosität der Wasser-in-Wasser Dispersion wurde, wie oben angegeben, mit 300 mPa · s bestimmt. Die Salzviskosität, ebenfalls wie oben angegeben, betrug 150 mPa · s.

### Vergleichsbeispiel 2

Es wurde Beispiel 2 wiederholt, nur dass zu keinem Zeitpunkt Zitronensäure zugesetzt wurde.

Von der so erhaltenen Wasser-in-Wasser Dispersion wurden deren Lösungsviskosiät 5 % wie oben angegeben, mit 280 mPa · s und deren Salzviskosität, wie oben angegeben, mit 135 mPa · s bestimmt.

### Beispiel 3

In einem 2 I-Kolben, versehen mit Rührer, Stickstoffzuleitung und Anschluß an eine Vakuumpumpe werden 163,2 g vollentsalztes Wasser, 144,75 g Trimethylammoniumethylacrylat-chlorid, 80 Gew.%ig, 231,0 g Acrylamid-Lösung, 50 Gew.%ig, 420,0 g Polydiallyldimethylammoniumchlorid, 40 Gew.%ig mit einer Viskosität der wässrigen Lösung im Bereich von 200 bis 400 mPas, 14,0 g Polyethylenglykol mit einem Molekulargewicht im Bereich von 9000 bis 12000, 12,2 g Ammoniumsulfat, technisch, 0,26 g Diethylentriaminpentansäure-Natriumsalz, 40 Gew.%ig sowie 1,54 g 2,2-Azo bis (2-amidinopropan)dihydrochlorid gegeben.

Der pH-Wert der Lösung beträgt 5,0. Die Lösung wird entsprechend der in Beispiel 1 angegebenen Arbeitsweise von Sauerstoff befreit und zur Polymerisation gebracht. Nach Erreichen einer maximalen Temperatur von 82 °C wird die Wasser-in-Wasser-Polymerdispersion, wie in Beispiel 1 angegeben, unter Rühren mit 12,85 g feinpulvriger Zitronensäure versetzt und nach fortdauerdem Rühren auf 20 °C abgekühlt. Der Polymerisatgehalt der Dispersion beträgt 39,9 Gew.%.

Die Dispersion besitzt eine Lösungsviskosität von 730 mPas und eine Salzviskosität von 210 mPas. Nach einer Lagerung der Dispersion über eine Zeit von 60 Tagen bei einer Temperatur von 40 °C wird eine Salzviskosität von 214 mPas ermittelt.

### Vergleichsbeispiel 3

Es wurde Beispiel 3 wiederholt, jedoch erfolgte zu keinem Zeitpunkt ein Zusatz von Zitronensäure.

Die so erhaltene Dispersion besitzt eine Lösungsviskosität von 700 mPas und eine Salzviskosität von 190 mPas. Nach einer Lagerung der Dispersion über eine Zeit von 60 Tagen bei einer Temperatur von 40 °C wird eine Salzviskosität von 136 mPas ermittelt, entsprechend einer Abnahme von 28,4 % bezogen auf den Wert nach Herstellung der Dispersion.

### Beispiel 4

In einem 2 I-Kolben versehen mit Rührer, Stickstoffzuleitung und Anschluss an eine Vakuumpumpe werden 272,6 g vollentsalztes Wasser, 66,9 g Trimethylammoniumethylacrylat-chlorid, 80 Gew%ig, 321,0 g Acrylamid-Lösung, 50 Gew.%ig310,0 g Polytrimethylammoniumpropylacrylamid-chlorid, 40 Gew.%ig mit einer Viskosität der wässrigen Lösung im Bereich von 150 bis 300 mPas, 20,0 g Ammoniumsulfat, technisch, 2,0 g Diethylentriaminpentansäure-Natriumsalz, 5,0 Gew.%ig sowie 0,5 g 2,2-Azo bis (2-amidinopropan)dihydrochlorid gegeben.

Die Lösung wird entsprechend der in Beispiel 1 angegebenen Arbeitsweise von Sauerstoff befreit, auf 40 °C erwärmt und zur Polymerisation gebracht. Nach Erreichen einer maximalen Temperatur von 86 °C wird die Wasser-in-Wasser-Polymerdispersion unter Rühren mit 5,0 g feinpulvriger Zitronensäure versetzt und unter fortlaufendem Rühren auf 20 °C abgekühlt. Der Polymerisatgehalt der Dispersion beträgt 33,8 Gew.%.

Die Dispersion besitzt eine Lösungsviskosität von 564 mPas und eine Salzviskosität von 248 mPas. Nach einer Lagerung der Dispersion über eine Zeit von 55 Tagen bei einer Temperatur von 50 °C beträgt die Lösungsviskosität 308 mPas, entsprechend einer Abnahme von 45,4 % bezogen auf den Wert nach Herstellung der Dispersion.

### Beispiel 5

Es wird eine Wasser-in-Wasser-Polymerdispersion wie in Beispiel 4 hergestellt, wobei jedoch die Monomerenlösung 267,6 g Wasser enthält und nach der Polymerisation 10,0 g feinpulvrige Zitronensäure zugesetzt werden.

Die Dispersion besitzt eine Lösungsviskosität von 548 mPas und eine Salzviskosität von 227 mPas. Nach einer Lagerung der Dispersion über eine Zeit von 55 Tagen bei einer Temperatur von 50 °C beträgt die Lösungsviskosität 336 mPas, entsprechend einer Abnahme von 38,7 % bezogen auf den Wert nach Herstellung der Dispersion.

### Beispiel 6

Es wird eine Wasser-in-Wasser-Polymerdispersion wie in Beispiel 4 hergestellt, wobei jedoch die Monomerenlösung 257,6 g Wasser enthält und nach der Polymerisation 20,0 g feinpulvrige Zitronensäure zugesetzt werden.

Die Dispersion besitzt eine Lösungsviskosität von 572 mPas und eine Salzviskosität von 226 mPas. Nach einer Lagerung der Dispersion über eine Zeit von 55 Tagen bei einer Temperatur von 50 °C beträgt die Lösungsviskosität 416 mPas, entsprechend einer Abnahme von 27,3 % bezogen auf den Wert nach Herstellung der Dispersion.

### Vergleichsbeispiel 4

Es wurde Beispiel 4 wiederholt, jedoch erfolgte zu keinem Zeitpunkt ein Zusatz von Zitronensäure.

Die Dispersion besitzt eine Lösungsviskosität von 500 mPas und eine Salzviskosität von 208 mPas. Nach einer Lagerung der Dispersion über eine Zeit von 55 Tagen bei einer Temperatur von 50 °C beträgt die Lösungsviskosität 5 mPas, entsprechend einer Abnahme von 99 % bezogen auf den Wert nach Herstellung der Dispersion.

### Beispiel 7

Es wird eine Monomerenlösung, wie in Beispiel 4 angegeben, hergestellt. Die Lösung wird zusätzlich mit 2,0 g Salzsäure, 30 % versetzt und entsprechend der Arbeitsweise von Beispiel 1 zu Polymerisation gebracht. Die Wasser-in-Wasser-Polymerdispersion wird danach in der angegebenen Weise mit 5,0 g Adipinsäure versetzt und abgekühlt.

Die Dispersion besitzt eine Lösungsviskosität von 708 mPas und eine Salzviskosität von 298 mPas.

Nach Lagerung der Dispersion während einer Zeit von 45 Tagen bei einer Temperatur von 50 °C beträgt die ermittelte Lösungsviskosität 464 mPas, entsprechend einer Abnahme von 34,5 % bezogen auf den Wert nach Herstellung der Dispersion.

### Beispiel 8

Es wird eine Monomerenlösung, wie in Beispiel 4 angegeben, hergestellt. Die Lösung wird zusätzlich mit 2,0 g Salzsäure, 30 % versetzt und entsprechend der Arbeitsweise von Beispiel 1 zur Polymerisation gebracht. Die Wasser-in-Wasser-Polymerdispersion wird danach in der angegebenen Weise mit 5,0 g Benzoesäure versetzt und abgekühlt.

Die Dispersion besitzt eine Lösungsviskosität von 768 mPas und eine Salzviskosität von 319 mPas.

Nach Lagerung der Dispersion über eine Zeit von 45 Tagen bei einer Temperatur von 50 °C beträgt die ermittelte Lösungsviskosität 532 mPas, entsprechend einer Abnahme von 30,7 % bezogen auf den Wert nach Herstellung der Dispersion.

### Beispiel 9

Es wird eine Monomerenlösung, wie in Beispiel 4 angegeben, hergestellt. Die Lösung wird zusätzlich mit 2,0 g Salzsäure, 30 % versetzt und entsprechend der Arbeitsweise von Beispiel 1 zur Polymerisation gebracht. Die Wasser-in-Wasser-Polymerdispersion wird danach in der angegebenen Weise mit 0,5 g Schwefelsäure 50%ig versetzt und abgekühlt.

Die Dispersion besitzt eine Lösungsviskosität von 716 mPas und eine Salzviskosität von 290 mPas.

Nach Lagerung der Dispersion über eine Zeit von 45 Tagen bei einer Temperatur von 50 °C beträgt die ermittelte Lösungsviskosität 460 mPas, entsprechend einer Abnahme von 35,8 % bezogen auf den Wert nach Herstellung der Dispersion.

### Beispiel 10

Es wird eine Monomerenlösung, wie in Beispiel 4 angegeben, hergestellt. Die Lösung wird zusätzlich mit 2,0 g Salzsäure, 30 % versetzt und entsprechend der Arbeitsweise von Beispiel 1 zur Polymerisation gebracht. Die Wasser-in-Wasser-Polymerdispersion wird danach in der angegebenen Weise mit 2,5 g Essigsäure versetzt und abgekühlt.

Die Dispersion besitzt eine Lösungsviskosität von 940 mPas und eine Salzviskosität von 395 mPas.

Nach Lagerung der Dispersion über eine Zeit von 45 Tagen bei einer Temperatur von 50 °C beträgt die ermittelte Lösungsviskosität 656 mPas, entsprechend einer Abnahme von 30,2 % bezogen auf den Wert nach Herstellung der Dispersion.

### Beispiel 11

Es wird eine Monomerenlösung, wie in Beispiel 4 angegeben, hergestellt. Die Lösung wird zusätzlich mit 2,0 g Salzsäure, 30 % versetzt und entsprechend der Arbeitsweise von Beispiel 1 zur Polymerisation gebracht. Die Wasser-in-Wasser-Polymerdispersion wird danach in der angegebenen Weise mit 5,0 g Zitronensäure versetzt und abgekühlt.

Die Dispersion besitzt eine Lösungsviskosität von 780 mPas und eine Salzviskosität von 341 mPas.

Nach Lagerung der Dispersion über eine Zeit von 45 Tagen bei einer Temperatur von 50 °C beträgt die ermittelte Lösungsviskosität 504 mPas, entsprechend einer Abnahme von 35,4 % bezogen auf den Wert nach Herstellung der Dispersion.

### Vergleichsbeispiel 5

Es wird eine Monomerenlösung wie in Beispiel 4 angegeben, hergestellt. Die Lösung wird zusätzlich mit 2,0 g Salzsäure, 30 Gew.%, versetzt und entsprechend der Arbeitsweise von Beispiel 1 zur Polymerisation gebracht und abgekühlt.

Die Dispersion besitzt eine Lösungsviskosität von 680 mPas und eine Salzviskosität von 287 mPas. Nach einer Lagerung der Dispersion über eine Zeit von 45 Tagen bei einer Temperatur von 50 °C beträgt die ermittelte Lösungsviskosität 368 mPas, entsprechend einer Abnahme von 45,9 % bezogen auf den Wert nach Herstellung der Dispersion.

### Beispiel 12

Es wird wie in Beispiel 11 verfahren, wobei jedoch die Monomerenlösung anstelle von 20,0 g Ammoniumsulfat, technisch jetzt 20,0 g Natriumchlorid enthält. Die Dispersion besitzt eine Lösungsviskosität von 752 mPas und eine Salzviskosität von 302 mPas.

Nach einer Lagerung der Dispersion über eine Zeit von 45 Tagen bei einer Temperatur von 50 °C beträgt die ermittelte Lösungsviskosität 568 mPas, entsprechend einer Abnahme von 24,5 % bezogen auf den Wert nach Herstellung der Dispersion.

### Beispiel 13

Es wird wie in Beispiel 11 verfahren, wobei jedoch die Monomerenlösung anstelle von 20,0 g Ammoniumsulfat, technisch jetzt 20,0 g Natriumsulfat · 10 H₂O enthält. Die Dispersion besitzt eine Lösungsviskosität von 976 mPas und eine Salzviskosität von 406 mPas.

Nach einer Lagerung der Dispersion über eine Zeit von 45 Tagen bei einer Temperatur von 50 °C beträgt die ermittelte Lösungsviskosität 672 mPas, entsprechend einer Abnahme von 31,1 % bezogen auf den Wert nach Herstellung der Dispersion.

### Beispiel 14

In einem 2 I-Kolben versehen mit Rührer, Stickstoffzuleitung und Anschluss an eine Vakuumpumpe werden 305,5 g Vollentsalztes Wasser, 135,5 g Trimethylammoniumethylacrylat-chlorid, 80 Gew%ig, 195,2 g Acrylamid-Lösung, 50 Gew.%ig, 300,0 g Polytrimethylammoniumpropylacrylamid-chlorid, 40 Gew.%ig mit einer Viskosität der wässrigen Lösung im Bereich von 150 bis 300 mPas, 20,5 g Polyethylenglykol mit einem Molekulargewicht im Bereich von 9000 bis 12000, 5,0 g Ammoniumsulfat, technisch und, 2,0 g Diethylentriaminpentansäure-Natriumsalz, 5,0 Gew.%ig gegeben.

Der pH-Wert der Lösung beträgt 5,0.
Die Lösung wird entsprechend der in Beispiel 1 angegebenen Arbeitsweise von Sauerstoff befreit, auf 40 °C erwärmt und durch Zugabe von 1 ml einer 5 Gew.%igen wässrigen Lösung von Natriumdisulfat sowie 5 ml tertiär Butylhydroperoxid, 0,1Gew.%ig, zur Polymerisation gebracht. Ggf. werden geringe Mengen tertiär Butylhydroperoxid nachgesetzt. Nach Erreichen einer maximalen Temperatur von 56 °C wird die Wasser-in-Wasser-Polymerdispersion unter Rühren mit 5,0 g feinpulvriger Zitronensäure versetzt und unter fortlaufendem Rühren auf 20 °C abgekühlt. Der Polymerisatgehalt der Dispersion beträgt 33,5 Gew.%.

Die Dispersion besitzt eine Lösungsviskosität von 912 mPas und eine Satzviskosität von 151 mPas. Nach einer Lagerung der Dispersion über eine Zeit von 42 Tagen bei einer Temperatur von 50 °C beträgt die Lösungsviskosität 732 mPas, entsprechend einer Abnahme von 19,7 % bezogen auf den Wert nach Herstellung der Dispersion.

### Beispiel 15

Es wird eine Wasser-in-Wasser-Polymerdispersion wie in Beispiel 14 hergestellt, wobei jedoch die Monomerenlösung 300,5 g Wasser enthält und nach der Polymerisation 10,0 g feinpulvrige Zitronensäure zugesetzt werden.

Die Dispersion besitzt eine Lösungsviskosität von 1380 mPas und eine Salzviskosität von 225 mPas. Nach einer Lagerung der Dispersion über eine Zeit von 42 Tagen bei einer Temperatur von 50 °C beträgt die Lösungsviskosität 1410 mPas.

### Vergleichsbeispiel 6

Es wird das Beispiel 15 nachgestellt mit der Abweichung, das der Zusatz von Zitronensäure nach der Polymerisation unterbleibt.

Die Dispersion besitzt eine Lösungsviskosität von 1240 mPas und eine Salzviskosität von 214 mPas. Nach einer Lagerung der Dispersion über eine Zeit von 42 Tagen bei einer Temperatur von 50 °C beträgt die Lösungsviskosität 256 mPas, entsprechend einer Abnahme von 79,4 % bezogen auf den Wert nach Herstellung der Dispersion.

### Anwendungsbeispiele I - VIII

Von den gemäß Beispielen 1 und 2 bzw. den Vergleichsbeispielen 1 und 2 erhaltenen Wasser-in-Wasser Dispersionen wurden jeweils die Flockungswerte unmittelbar nach der Herstellung bzw. nach einer Lagerung von 20 Tagen in verschlossenen Gefäßen bei 50°C gemäß der vorstehend angegebenen Methode bestimmt.

Die entsprechenden Flockungswerte in Sekunden sind in der nachfolgenden Tabelle I angegeben.

**Tabelle I**

| Anwendungsbeispiel | Wasser-in-Wasser Dispersion gemäß | Flockungswert (s) |
|---|---|---|
| I | Beispiel 1, Tag der Herstellung | 12,8 |
| II | Beispiel 1, nach 20 Tagen bei 50°C gelagert | 12,9 |
| III | Vergleichsbeispiel 1, Tag der Herstellung | 12,6 |
| IV | Vergleichsbeispiel 1, nach 20 Tagen bei 50°C gelagert | 34,6 |
| V | Beispiel 2, Tag der Herstellung | 6,8 |
| VI | Beispiel 2, nach 20 Tagen bei 50°C gelagert | 7,2 |
| VII | Vergleichsbeispiel 2, Tag der Herstellung | 7,0 |
| VIII | Vergleichsbeispiel 2, nach 20 Tagen bei 50°C gelagert | 23,9 |

### Anwendungsbeispiele IX A - XVI C

Die Wasser-in-Wasser Dispersionen, die nach Beispiel 1 und 2 bzw. den Vergleichsbeispielen 1 und 2 erhalten wurden, wurden als Entwässerungshilfsmittel nach ihrer Herstellung bzw. nach einer Lagerung im geschlossenen Gefäß für 20 Tage bei 50°C eingesetzt. Ihre Wirkung wurde gemäß der oben angegebenen Methode nach Schopper Riegler bestimmt.

Die entsprechenden Werte sind in der nachfolgenden Tabelle II angegeben.

**Tabelle II**

| Anwendungsbeispiel | Wasser-in-Wasser Dispersion gemäß | Entwässerungszeit (s) |
|---|---|---|
| IX A | Beispiel 1, Tag der Herstellung | 98 |
| IX B | Beispiel 1, Tag der Herstellung | 79 |
| IX C | Beispiel 1, Tag der Herstellung | 61 |
| X A | Beispiel 1, nach 20 Tagen bei 50°C gelagert | 99 |
| X B | Beispiel 1, nach 20 Tagen bei 50°C gelagert | 77 |
| X C | Beispiel 1, nach 20 Tagen bei 50°C gelagert | 60 |
| XI A | Vergleichsbeispiel 1, Tag der Herstellung | 96 |
| XI B | Vergleichsbeispiel 1, Tag der Herstellung | 80 |
| XI C | Vergleichsbeispiel 1, Tag der Herstellung | 61 |
| XII A | Vergleichsbeispiel 1, nach 20 Tagen bei 50°C gelagert | 122 |
| XII B | Vergleichsbeispiel 1, nach 20 Tagen bei 50°C gelagert | 118 |
| XII C | Vergleichsbeispiel 1, nach 20 Tagen bei 50°C gelagert | 90 |
| XIII A | Beispiel 2, Tag der Herstellung | 82 |
| XIII B | Beispiel 2, Tag der Herstellung | 60 |
| XIII C | Beispiel 2, Tag der Herstellung | 50 |
| XIVA | Beispiel 2, nach 20 Tagen bei 50°C gelagert | 84 |
| XIV B | Beispiel 2, nach 20 Tagen bei 50°C gelagert | 60 |
| XIV C | Beispiel 2, nach 20 Tagen bei 50°C gelagert | 50 |
| XV A | Vergleichsbeispiel 2, Tag der Herstellung | 83 |
| XV B | Vergleichsbeispiel 2, Tag der Herstellung | 61 |
| XV C | Vergleichsbeispiel 2, Tag der Herstellung | 51 |
| XVI A | Vergleichsbeispiel 2, nach 20 Tagen bei 50°C gelagert | 101 |
| XVI B | Vergleichsbeispiel 2, nach 20 Tagen bei 50°C gelagert | 82 |
| XVI C | Vergleichsbeispiel 2, nach 20 Tagen bei 50°C gelagert | 66 |

A, B, C steht für 0,01 Gew.%, 0,02 Gew.% bzw. 0,03 Gew.% Entwässerungshilfsmittel auf atro Stoff.

Anwendung der Wasser-in-Wasser Dispersionen erhalten gemäß Beispielen 3 bis 15 bzw. den Vergleichsbeispielen 3 bis 6.

Wie in Tabelle III angegeben, wurde von dieser Wasser-in-Wasser Dispersion jeweils der Flockungswert (FW) unmittelbar nach der Herstellung bzw. nach einer Lagerung von 20 Tagen im geschlossenen Gefäß bei 25°C (RT) bzw. bei 50°C nach vorstehend angegebener Methode bestimmt. Nach der angegebenen Lagerung wurde auch die Entwässerungswirkung nach der oben angegebenen Methode bestimmt.

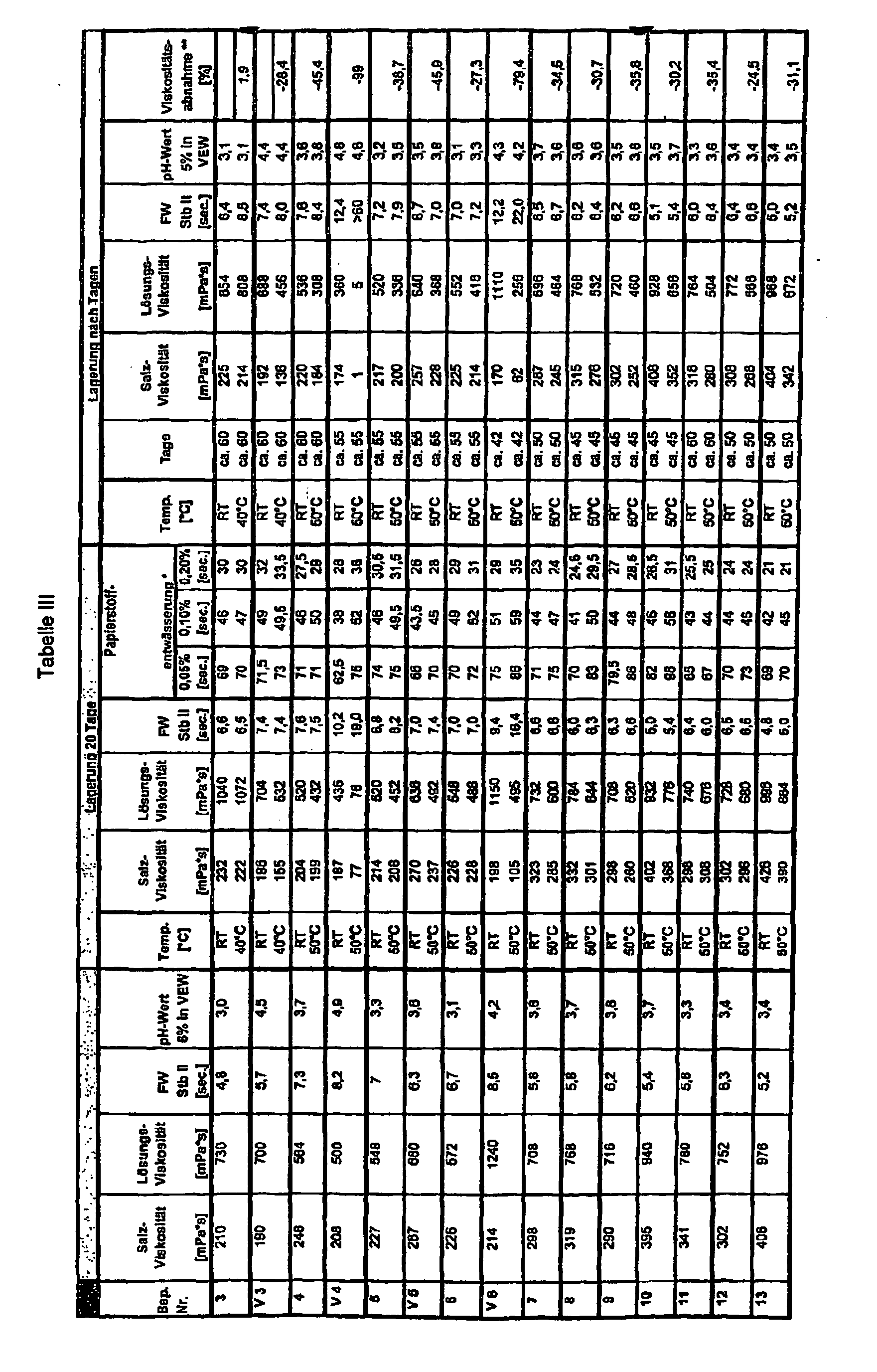

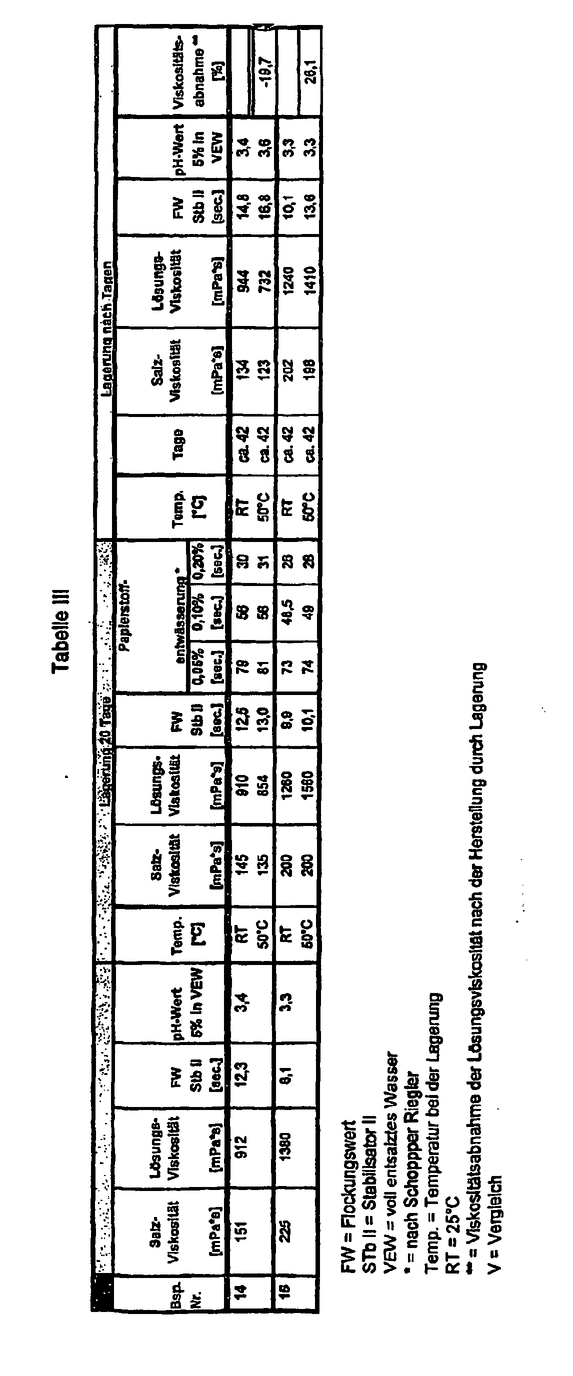

## Patentansprüche

1. Verfahren zur Herstellung einer Wasser-in-Wasser Polymerdispersion enthaltend Polymerisat A und wenigstens ein polymeres Dispergiermittel B,
gemäß dem Monomere, die in einer wässrigen Phase enthaltend das wasserlösliche Dispergiermittel B verteilt sind, ggf. unter Zugabe eines wasserlöslichen Salzes einer radikalischen Polymerisation unterworfen werden und nach der Polymerisation zu dem so erhaltenen wasserlöslichen und/oder wasserquellbaren Polymerisat A eine wasserlösliche Säure zugesetzt wird,
wobei das Dispergiermittel B ein kationisches Polymerisat ist, das aus wenigstens 30 Gew.-% kationischem Monomer aufgebaut ist, und
wobei die Säure in Mengen von 0,1 bis 5 Gew.-% und das Salz in Mengen bis maximal 3,0 Gew.-%, jeweils bezogen auf die Gesamtdispersion, zugesetzt werden, wobei die Gesamtmenge Salz und Säure maximal 5 Gew.-%, bezogen auf die Gesamtdispersion, beträgt.

2. Verfahren nach Anspruch 1, **dadurch gekennzeichnet, dass** die Säure in Mengen von 0,2 bis 3,5 Gew.-%, vorzugsweise 0,3 bis 2,0 Gew.-%, bezogen auf die Gesamtdispersion, zugesetzt wird.

3. Verfahren nach Anspruch 1 oder 2, **dadurch gekennzeichnet, dass** das Salz in einer Menge bis maximal 2,0 Gew.-%, vorzugsweise von 0,5 bis 1,5 Gew.-%, bezogen auf die Gesamtdispersion, zugesetzt wird.

4. Verfahren nach Ansprüchen 1 bis 3, **dadurch gekennzeichnet, dass** die Säure und das Salz in einer Gesamtmenge von maximal 3,5 Gew.-%, bezogen auf die Gesamtdispersion, zugesetzt wird.

5. Verfahren nach Ansprüchen 1 bis 4, **dadurch gekennzeichnet, dass** als wasserlösliche Säure eine organische Säure und/oder eine anorganische Säure, vorzugsweise eine organische Carbonsäure, Sulfonsäure, Phosphonsäure und/oder Mineralsäure eingesetzt wird.

6. Verfahren nach Anspruch 5, **dadurch gekennzeichnet, dass** als Carbonsäure, eine aliphatische oder aromatische Mono-, Di-, Poly-Carbonsäure und/oder eine Hydroxycarbonsäure, vorzugsweise Essigsäure, Propionsäure, Zitronensäure, Oxalsäure, Bernsteinsäure, Malonsäure, Adipinsäure, Fumarsäure, Maleinsäure, Benzoesäure, besonders bevorzugt Zitronensäure, Adipinsäure und/oder Benzoesäure eingesetzt wird.

7. Verfahren nach Anspruch 5, **dadurch gekennzeichnet, dass** als anorganische Säure Salzsäure, Schwefelsäure, Salpetersäure und/oder Phosphorsäure eingesetzt wird.

8. Verfahren nach Ansprüchen 1 bis 7, **dadurch gekennzeichnet, dass** als wasserlösliche Salz ein Ammonium-, Alkalimetall- und/oder ErdalkalimetallSalz eingesetzt wird.

9. Verfahren nach Anspruch 8, **dadurch gekennzeichnet, dass** als anorganisches Salz ein Ammonium-, Natrium-, Kalium-, Kalzium- und/oder Magnesiumsalz eingesetzt wird.

10. Verfahren nach Anspruch 8 oder 9, **dadurch gekennzeichnet, dass** das Salz ein Salz einer anorganischen Säure oder einer organischen Säure, vorzugsweise einer organischen Carbonsäure, Sulfonsäure, Phosphonsäure oder einer Mineralsäure ist.

11. Vefahren nach Anspruch 10, **dadurch gekennzeichnet, dass** das wasserlösliche Salz ein Salz einer aliphatischen oder aromatischen Mono-, Di-, Poly-Carbonsäure, einer Hydroxcarbonsäure, vorzugsweise der Essigsäure, Propionsäure, Zitronensäure, Oxalsäure, Bernsteinsäure, Malonsäure, Adipinsäure, Fumarsäure, Maleinsäure, Benzoesäure, Schwefelsäure, Salzsäure oder Phosphorsäure ist.

12. Verfahren nach Anspruch 11, **dadurch gekennzeichnet, dass** als wasserlösliches Salz Natriumchlorid, Ammoniumsulfat und/oder Natriumsulfat eingesetzt wird.

13. Verfahren nach Ansprüchen 1 bis 12, **dadurch gekennzeichnet, dass** als Dispergiermittel B ein wasserlösliches Polymeres mit einem M_{w} von maximal 2,0 x 10⁶, vorzugsweise 50 000 bis 1,2 x 10⁶ g/mol, ggf. gemischt mit einem polyfunktionellen Alkohol und/oder einem entsprechenden Umsetzungsprodukt mit einem Fettamin eingesetzt wird.

14. Verfahren nach Ansprüchen 1 bis 13, **dadurch gekennzeichnet, dass** das Dispergiermittel B aus wenigstens 50 Gew.-%, besonders bevorzugt 100 Gew.-%, kationischem Monomer aufgebaut ist.

15. Verfahren nach Anspruch 14, **dadurch gekennzeichnet, dass** das kationische Monomer ein Diallyldimethylammoniumchlorid, ein Dialkylaminoalkyl(meth)-acrylat oder -acrylamid mit C₁-C₃ in den Alkyl bzw. Alkylengruppen und protoniert oder quatemiert als Ammoniumsalz, vorzugsweise das mit Methylchlorid quaternierte Ammoniumsalz von Dimethylaminoethyl(meth)acrylat, Dimethylaminopropyl(meth)acrylat oder von Dimethylaminopropyl(meth)-acrylamid, besonders bevorzugt Diallyldimethylammoniumchlorid ist.

16. Verfahren nach Ansprüchen 13 bis 15, **dadurch gekennzeichnet, dass** als polyfunktioneller Alkohol ein Polyalkylenglykol, vorzugsweise Polyethylenglykol, Polypropylenglykol, ein Blockpolymeres von Propylen-/Ethylenoxid mit einem MG von 1 500 bis 50 000, Glycerin, Ethylenglykol, Propylenglykol, Pentaerythrit und/oder Sorbitol eingesetzt wird.

17. Verfahren nach Ansprüchen 1 bis 16, **dadurch gekennzeichnet, dass** das polymere Dispergiermittel B und der ggf. vorhandene polyfunktionelle Alkohol in Mengen von 5 bis 50 Gew.-%, bezogen auf die Gesamtdispersion, vorzugsweise von 10 bis 20 Gew.-%, eingesetzt wird.

18. Verfahren nach Ansprüchen 13 bis 17, **dadurch gekennzeichnet, dass** das Gewichtsverhältnis des polymeren Dispergiermittels B zu dem polyfunktionellen Alkohol 1:0,01 bis 0,5, vorzugsweise 1:0,01 bis 0,3 beträgt.

19. Verfahren nach Ansprüchen 1 bis 18, **dadurch gekennzeichnet, dass** das Polymerisat A ein M_{w} von 1,0 x 10⁶ g/mol aufweist.

20. Verfahren nach den Ansprüchen 1 bis 19, **dadurch gekennzeichnet, dass** das Polymerisat A aus nichtionischen und/oder kationischen und/oder amphiphilen, ethylenisch ungesättigten, vorzugsweise wasserlöslichen Monomeren aufgebaut wird, wobei der ggf. vorhandene Anteil an wasserunlöslichen Monomeren so gewählt wird, dass die Wasserlöslichkeit bzw. Wasserquellbarkeit des Polymerisats A nicht beeinträchtigt wird.

21. Verfahren nach Anspruch 20, **dadurch gekennzeichnet, dass**
als nichtionische Monomere der allgemeinen Formel (I) 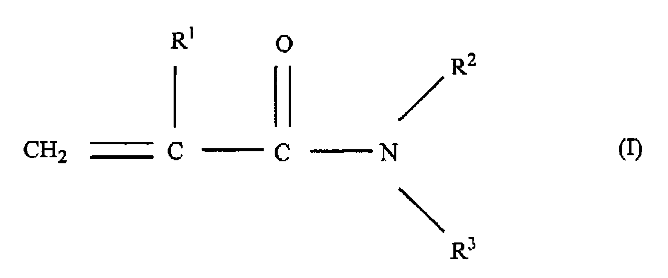 in der
R¹ für einen Wasserstoff oder einen Methylrest, und
R² und R³ ,unabhängig voneinander, für Wasserstoff, für einen Alkyl- oder Hydroxyalkyl-Rest mit 1 bis 5 C-Atomen
stehen, als kationische Monomere Verbindungen der allgemeinen Formel (II) 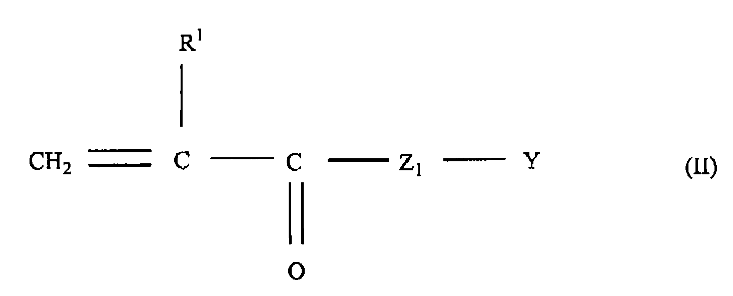 in der
R¹ für Wasserstoff oder einen Methylrest,
Z₁ für O, NH oder NR₄ mit R₄ für einen Alkylrest mit 1 bis 4 C- Atomen,
Y für eine der Gruppen 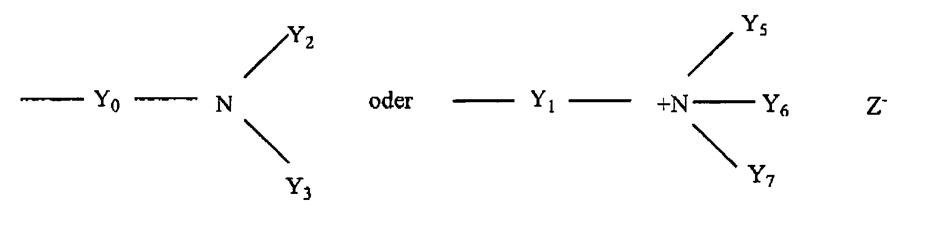
stehen, wobei
Y₀ und Y₁ für einen gegebenenfalls durch Hydroxygruppen substituierten Alkylenrest mit 2 bis 6 C-Atomen,
Y₂, Y₃, Y₄, Y₅, Y₆, Y₇, unabhängig voneinander, jeweils für einen Alkylrest mit 1 bis 6 C-Atomen,
Z⁻ für Halogen, Acetat, SO₄CH₃⁻
stehen,
und
als amphiphile Monomere Verbindungen der allgemeinen Formel (III) oder (IV) 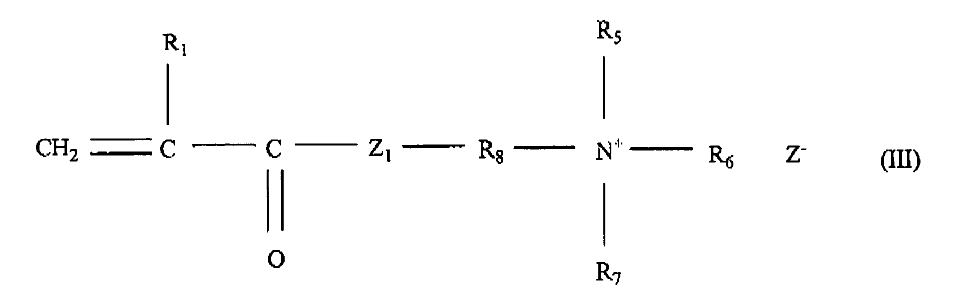 wobei
Z₁ für O, NH, NR₄ mit R₄ für einen Alkylrest mit 1 bis 4 Kohlenstoff- atomen,
R₁ für Wasserstoff oder einen Methylrest,
R₈ für einen Alkylenrest mit 1 bis 6 Kohlenstoffatomen,
R₅ und R₆ unabhängig voneinander für einen Alkylrest mit 1 bis 6 Kohlenstoffatomen,
R₇ für einen Alkyl-, Aryl- und/oder Aralkyl-Rest mit 8 bis 32 Kohlenstoffatomen und
Z⁻ für Halogen, Pseudohalogen, SO₄CH₃⁻ oder Acetat
stehen,
oder 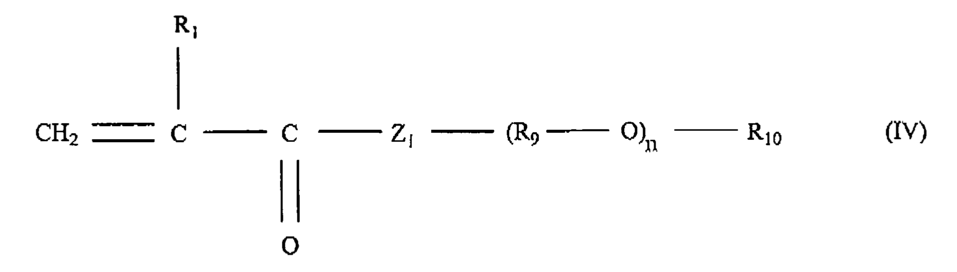 wobei
Z₁ für O, NH, NR₄ mit R₄ für einen Alkylrest mit 1 bis 4 Kohlen- stoffatomen,
R₁ für Wasserstoff oder Methylrest,
R₁₀ für Wasserstoff, einen Alkyl-, Aryl- und/oder Aralkyl-Rest mit 8 bis 32 Kohlenstoffatomen,
R₉ für einen Alkylenrest mit 2 bis 6 Kohlenstoffatomen und
n für eine ganze Zahl von 1 und 50
stehen,
eingesetzt werden.

22. Verfahren nach Anspruch 20 oder 21, **dadurch gekennzeichnet, dass** das Polymerisat A aus 1 bis 99 Gew.-%, vorzugsweise 20 bis 80 Gew.-% kationischer Monomeren aufgebaut wird.

23. Verfahren nach Ansprüchen 1 bis 22, **dadurch gekennzeichnet, dass** das Polymerisat A in Mengen von 5 bis 60 Gew.-%, vorzugsweise 10 bis 50 Gew.-%, bezogen auf die Gesamtdispersion, vorliegt.

24. Verfahren nach Ansprüchen 1 bis 23, **dadurch gekennzeichnet, dass** für die radikalische Polymerisation das Initiatorsystem kontinuierlich während des gesamten Polymerisationsverlaufs zugegeben wird.

25. Wasser-in-Wasser Polymerdispersion erhältlich nach einem oder mehreren der Ansprüche 1 bis 24.

26. Verwendung der Wasser-in-Wasser-Polymerdispersion nach Anspruch 25 als Flockungsmittel bei der Sedimentation von Feststoffen, vorzugsweise bei der Wasser- und Prozesswasser-Aufbereitung oder Abwasserreinigung, bei der Rohstoffgewinnung, vorzugsweise von Kohle, Aluminium oder Erdöl, als Hilfsmittel bei der Papierherstellung oder als Demulgator bei Trennung von Öl- und/oder Fett-haltigen Wassergemischen.

27. Verwendung der Wasser-in-Wasser-Polymerdispersion nach Anspruch 25 als Verdickungsmittel.

28. Verwendung der Wasser-in-Wasser-Polymerdispersion nach Anspruch 25 als Retentions- und Entwässerungsmittel bei der Papierherstellung.

29. Verwendung der Wasser-in-Wasser-Polymerdispersion nach Anspruch 25 als Zusatz zu einem Pflanzenschutzmittel ggf. zusammen mit anderen biologisch wirksamen Stoffen.

30. Verwendung der Wasser-in-Wasser-Polymerdispersion nach Anspruch 25 als Zusatz zu einem Erosionsschutzmittel.

## Claims

1. Method for manufacturing a water-in-water polymer dispersion containing polymer A and at least one polymeric dispersant B,
according to which monomers, which are dispersed in an aqueous phase containing water-soluble dispersant B, are subjected to free-radical polymerisation, optionally with addition of a water-soluble salt, and,
after polymerisation, a water-soluble acid is added to the water-soluble and/or water-swellable polymer A obtained in this way,
the dispersant B being a cationic polymer which is composed of at least 30% by weight of cationic monomer, and
the acid being added in quantities of 0.1 to 0.5% by weight and the salt in quantities of up to a maximum of 3% by weight, each referred to the total dispersion, the total quantity of salt and acid amounting to a maximum of 5% by weight referred to the total dispersion.

2. Method as per Claim 1, **characterised in that** the acid is added in quantities of 0.2 to 3.5% by weight, preferably 0.3 to 2.0% by weight, referred to the total dispersion.

3. Method as per Claim 1 or 2, **characterised in that** the salt is added in a quantity of up to a maximum of 2.0% by weight, preferably 0.5 to 1.5% by weight, referred to the total dispersion.

4. Method as per Claims 1 to 3, **characterised in that** the acid and the salt are added in a total quantity of a maximum of 3.5% by weight, referred to the total dispersion.

5. Method as per Claims 1 to 4, **characterised in that** the water-soluble acid used is an organic acid and/or an inorganic acid, preferably an organic carboxylic acid, sulfonic acid, phosphonic acid and/or mineral acid.

6. Method as per Claim 5, **characterised in that** the carboxylic acid used is an aliphatic or aromatic monocarboxylic, dicarboxylic, polycarboxylic acid and/or a hydroxycarboxylic acid, preferably acetic acid, propionic acid, citric acid, oxalic acid, succinic acid, malonic acid, adipic acid, fumaric acid, maleic acid, benzoic acid, particularly preferably citric acid, adipic acid and/or benzoic acid.

7. Method as per Claim 5, **characterised in that** the inorganic acid used is hydrochloric acid, sulfuric acid, nitric acid and/or phosphoric acid.

8. Method as per Claims 1 to 7, **characterised in that** the water-soluble salt used is an ammonium, alkali metal and/or alkaline-earth metal salt.

9. Method as per Claim 8, **characterised in that** the inorganic salt used is an ammonium, sodium, potassium, calcium and/or magnesium salt.

10. Method as per Claim 8 or 9, **characterised in that** the salt is a salt of an inorganic acid or an organic acid, preferably of an organic carboxylic acid, sulfonic acid, phosphonic acid or of a mineral acid.

11. Method as per Claim 10, **characterised in that** the water-soluble salt is a salt of an aliphatic or aromatic monocarboxylic, dicarboxylic or polycarboxylic acid, a hydroxycarboxylic acid, preferably of acetic acid, propionic acid, citric acid, oxalic acid, succinic acid, malonic acid, adipic acid, fumaric acid, maleic acid, benzoic acid, sulfuric acid, hydrochloric acid or phosphoric acid.

12. Method as per Claim 11, **characterised in that** the water-soluble salt used is sodium chloride, ammonium sulfate and/or sodium sulfate.

13. Method as per Claims 1 to 12, **characterised in that** the dispersant B used is a water-soluble polymer with a maximum M_{w} of 2.0 x 10⁶, preferably 50,000 to 1.2 x 10⁶ g/mol, optionally mixed with a polyfunctional alcohol and/or a corresponding reaction product with a fatty amine.

14. Method as per Claim 13, **characterised in that** the dispersant B is composed of at least 50% by weight, particularly preferably 100% by weight, of cationic monomer.

15. Method as per Claim 14, **characterised in that** the cationic monomer is a diallyldimethylammonium chloride, a dialkylaminoalkyl (meth)acrylate or dialkylaminoalkyl(meth)acrylamide with C₁-C₃ in the alkyl or alkylene groups and protonated or quaternised as an ammonium salt, preferably the methyl chloride-quaternised ammonium salt of dimethylaminomethyl (meth)acrylate, dimethylaminopropyl (meth)acrylate or dimethylaminopropyl(meth)acrylamide, particularly preferably diallyldimethylammonium chloride.

16. Method as per Claims 13 to 15, **characterised in that** the polyfunctional alcohol used is a polyalkylene glycol, preferably polyethylene glycol, a block polymer of propylene/ethylene oxide with a molecular weight of 1,500 to 50,000, glycerol, ethylene glycol, propylene glycol, pentaerythritol and/or sorbitol.

17. Method as per Claims 1 to 16, **characterised in that** the polymeric dispersant B and the optionally present polyfunctional alcohol are added in quantities of 5 to 50% by weight, preferably 10 to 20% by weight, referred to the total dispersion.

18. Method as per Claims 13 to 17, **characterised in that** the weight ratio of polymeric dispersant B to the polyfunctional alcohol is 1:0.01 to 0.5, preferably 1:0.01 to 0.3.

19. Method as per Claims 1 to 18, **characterised in that** polymer A has an M_{w} of >1.0 x 10⁶g/mol.

20. Method as per Claims 1 to 19, **characterised in that** polymer A is composed of nonionic and/or cationic and/or amphiphilic, ethylenically unsaturated, preferably water-soluble monomers, the optionally present content of water-insoluble monomers being selected so as not to impair the water-solubility or water-swellability of polymer A.

21. Method as per Claim 20, **characterised in that**
the nonionic monomers used are compounds of general formula (I) 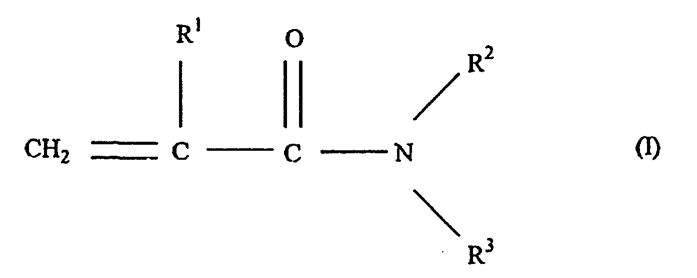 in which
R¹ denotes hydrogen or a methyl residue, and
R² and R³ mutually independently denote hydrogen, an alkyl or hydroxyalkyl residue with 1 to 5 C atoms,
the cationic monomers used are compounds of general formula (II) 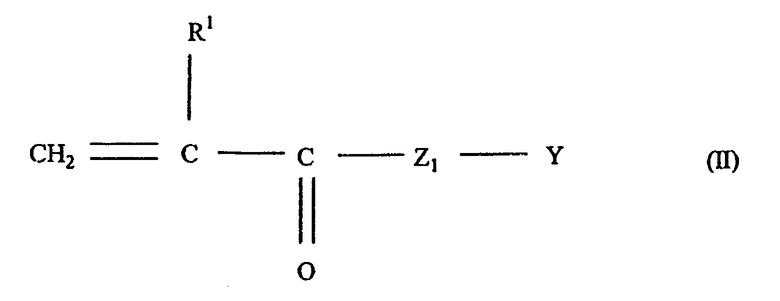 in which
R¹ denotes hydrogen or a methyl residue,
Z₁ denotes O, NH or NR₄ with R₄ denoting an alkyl residue with 1 to 4 C atoms,
Y denotes one of the groups 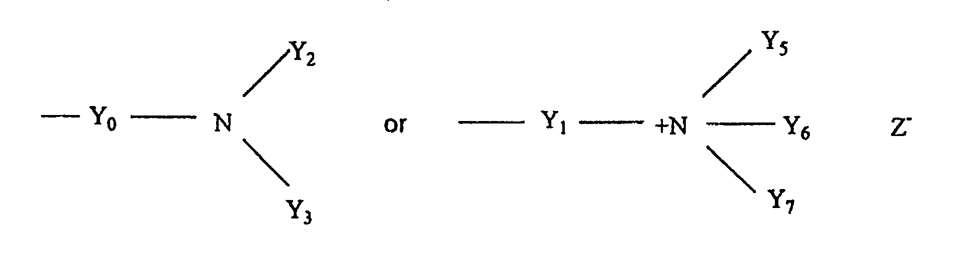
wherein
Y₀ and Y₁ denote an alkylene residue, optionally substituted with hydroxy groups, with 2 to 6 C atoms,
Y₂, Y₃, Y₄, Y₅, Y₆, Y₇, mutually independently denote an alkyl residue with 1 to 6 C atoms,
Z⁻ denotes halogen, acetate, SO₄CH₃⁻,
and
the amphiphilic monomers are compounds of general formula (III) or (IV) 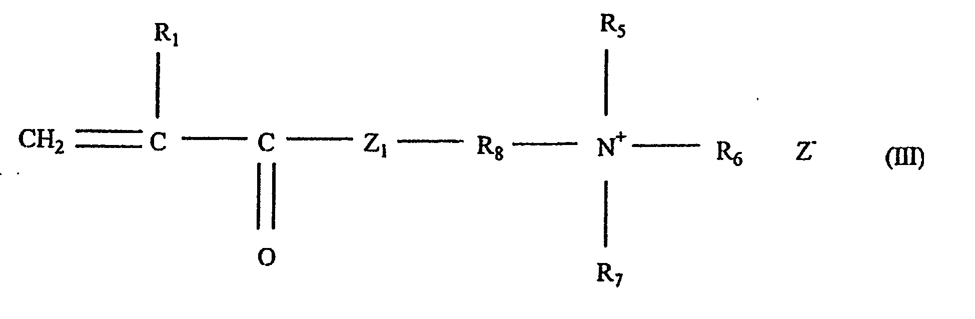 wherein
Z₁ denotes O, NH, NR₄ with R₄ denoting an alkyl residue with 1 to 4 carbon atoms,
R₁ denotes hydrogen or a methyl residue,
R₈ denotes an alkylene residue with 1 to 6 carbon atoms,
R₅ and R₆ mutually independently denote an alkyl residue with 1 to 6 carbon atoms,
R₇ denotes an alkyl, aryl and/or aralkyl residue with 8 to 32 carbon atoms, and
Z⁻ denotes halogen, pseudo-halogen, SO₄CH₃⁻ or acetate,
or 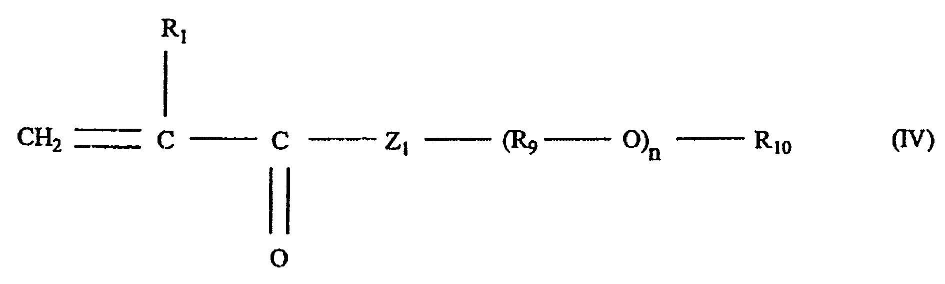 wherein
Z₁ denotes O, NH, NR₄ with R₄ denoting an alkyl residue with 1 to 4 carbon atoms,
R₁ denotes hydrogen or a methyl residue,
R₁₀ denotes hydrogen, an alkyl, aryl and/or aralkyl residue with 8 to 32 carbon atoms,
R₉ denotes an alkylene residue with 2 to 6 carbon atoms,
and
n denotes an integer between 1 and 50.

22. Method as per Claim 20 or 21, **characterised in that** polymer A is composed of 1 to 99% by weight, preferably 20 to 80% by weight, of cationic monomers.

23. Method as per Claims 1 to 22, **characterised in that** polymer A is present in quantities of 5 to 60% by weight, preferably 10 to 50% by weight, referred to the total dispersion.

24. Method as per Claims 1 to 23, **characterised in that**, for free-radical polymerisation, the initiator system is added continuously during the entire course of polymerisation.

25. Water-in-water polymer dispersion obtainable by one or more of Claims 1 to 24.

26. Use of the water-in-water polymer dispersion as per Claim 25 as a flocculant in the settling of solids, preferably in the conditioning of water and process water or in waste water treatment, in the extraction of raw materials, preferably of coal, aluminium or petroleum, as an auxiliary in papermaking or as a demulsifier in the separation of water mixtures containing oil and/or fat.

27. Use of the water-in-water polymer dispersion as per Claim 25 as a thickener.

28. Use of the water-in-water polymer dispersion as per Claim 25 as a retention agent and drainage aid in papermaking.

29. Use of the water-in-water polymer dispersion as per Claim 25 as an additive for a crop protection agent, possibly together with other biologically active substances.

30. Use of the water-in-water polymer dispersion as per Claim 25 as an additive for an anti-erosion agent.

## Revendications

1. Procédé pour la préparation d'une dispersion eau-dans-eau de polymère contenant un polymère A et au moins un dispersant polymère B, selon lequel des monomères qui sont dispersés dans une phase aqueuse contenant le dispersant B hydrosoluble, éventuellement avec addition d'un sel hydrosoluble, sont soumis à une polymérisation radicalaire et, après la polymérisation, on ajoute un acide hydrosoluble au polymère A hydrosoluble et/ou pouvant être gonflé dans l'eau, ainsi obtenu, le dispersant B étant un polymère cationique qui est constitué d'au moins 30% en poids de monomère cationique, et l'acide étant ajouté en quantités de 0,1 à 5 % en poids et le sel en quantités d'au maximum 3,0 % en poids, chaque fois par rapport à la dispersion totale, la quantité totale de sel et d'acide étant au maximum de 5 % en poids, par rapport à la dispersion totale.

2. Procédé selon la revendication 1, **caractérisé en ce que** l'acide est ajouté en quantités de 0,2 à 3, 5 % en poids, de préférence de 0,3 à 2,0 % en poids, par rapport à la dispersion totale.

3. Procédé selon la revendication 1 ou 2, **caractérisé en ce que** le sel est ajouté en une quantité d'au maximum 2,0 % en poids, de préférence de 0,5 à 1,5 % en poids, par rapport à la dispersion totale.

4. Procédé selon les revendications 1 à 3, **caractérisé en ce qu'**on ajoute l'acide et le sel en une quantité totale d'au maximum 3,5 % en poids, par rapport à la dispersion totale.

5. Procédé selon les revendications 1 à 4, **caractérisé en ce qu'**on utilise comme acide hydrosoluble un acide organique et/ou un acide inorganique, de préférence un acide carboxylique, sulfonique, phosphonique organique et/ou un acide minéral.

6. Procédé selon la revendication 5, **caractérisé en ce qu'**on utilise en tant qu'acide carboxylique un acide mono-, di-, polycarboxylique aliphatique ou aromatique et/ou un acide hydroxycarboxylique, de préférence l'acide acétique, l'acide propionique, l'acide citrique, l'acide oxalique, l'acide succinique, l'acide malonique, l'acide adipique, l'acide fumarique, l'acide maléique, l'acide benzoïque, de façon particulièrement préférée l'acide citrique, l'acide adipique et/ou l'acide benzoïque.

7. Procédé selon la revendication 5, **caractérisé en ce qu'**on utilise en tant qu'acide inorganique l'acide chlorhydrique, l'acide sulfurique, l'acide nitrique et/ou l'acide phosphorique.

8. Procédé selon les revendications 1 à 7, **caractérisé en ce qu'**on utilise en tant que sel hydrosoluble un sel d'ammonium, de métal alcalin et/ou de métal alcalino-terreux.

9. Procédé selon la revendication 8, **caractérisé en ce qu'**on utilise en tant que sel inorganique un sel d'ammonium, de sodium, de potassium, de calcium et/ou de magnésium.

10. Procédé selon la revendication 8 ou 9, **caractérisé en ce que** le sel est un sel d'un acide inorganique ou d'un acide organique, de préférence d'un acide carboxylique, sulfonique, phosphonique organique, ou d'un acide minéral.

11. Procédé selon la revendication 10, **caractérisé en ce que** le sel hydrosoluble est un sel d'un acide mono-, di-, polycarboxylique aliphatique ou aromatique, d'un acide hydroxycarboxylique, de préférence de l'acide acétique, propionique, citrique, oxalique, succinique, malonique, adipique, fumarique, maléique, benzoïque, sulfurique, chlorhydrique ou phosphorique.

12. Procédé selon la revendication 11, **caractérisé en ce qu'**on utilise en tant que sel hydrosoluble le chlorure de sodium, le sulfate d'ammonium et/ou le sulfate de sodium.

13. Procédé selon les revendications 1 à 12, **caractérisé en ce qu'**on utilise en tant que dispersant B un polymère hydrosoluble ayant une masse moléculaire M_{w} d'au maximum 2,0×10⁶, de préférence de 50 000 à 1,2×10⁶ g/mole, éventuellement en mélange avec un alcool polyfonctionnel et/ou avec un produit de réaction correspondant avec une amine grasse.

14. Procédé selon les revendications 1 à 13, **caractérisé en ce que** le dispersant B est constitué d'au moins 50 % en poids, de façon particulièrement préférée de 100 % en poids de monomère cationique.

15. Procédé selon la revendication 14, **caractérisé en ce que** le monomère cationique est un chlorure de diallyldiméthylammonium, un (méth)acrylate de dialkylaminoalkyle ou un dialkylaminoalkylacrylamide à groupes alkyle ou alkylène en C₁-C₃ et protoné ou rendu quaternaire sous forme de sel d'ammonium, de préférence le sel d'ammonium, rendu quaternaire avec du chlorure de méthyle, de (méth)-acrylate de diméthylaminoéthyle, (méth)acrylate de diméthylaminopropyle ou de diméthylaminopropyl-(méth)acrylamide, de façon particulièrement préférée le chlorure de diallyldiméthylammonium.

16. Procédé selon les revendications 13 à 15, **caractérisé en ce qu'**on utilise en tant qu'alcool polyfonctionnel un polyalkylèneglycol, de préférence le polyéthylèneglycol, le polypropylèneglycol, un polymère séquencé d'oxyde d'éthylène/propylène ayant un PM de 1 500 à 50 000, le glycérol, l'éthylèneglycol, le propylèneglycol, le pentaérythritol et/ou le sorbitol.

17. Procédé selon les revendications 1 à 16, **caractérisé en ce qu'**on utilise le dispersant polymère B et l'alcool polyfonctionnel éventuellement présent en quantités de 5 à 50 % en poids, par rapport à la dispersion totale, de préférence de 10 à 20 % en poids.

18. Procédé selon l'une des revendications 13 à 17, **caractérisé en ce que** le rapport pondéral du dispersant polymère B à l'alcool polyfonctionnel va de 1:0,01 à 1:0,5, de préférence de 1:0,01 à 1:0,3.

19. Procédé selon les revendications 1 à 18, **caractérisé en ce que** le polymère A présente une masse moléculaire M_{w} de > 1,0×10⁶ g/mole.

20. Procédé selon les revendications 1 à 19, **caractérisé en ce que** le polymère A est constitué de monomères non ioniques et/ou cationiques et/ou amphiphiles, à insaturation éthylénique, de préférence hydrosolubles, la proportion éventuellement présente de monomères insolubles dans l'eau étant choisie de manière à ne pas altérer la solubilité dans l'eau du polymère A ou son aptitude à gonfler dans l'eau.

21. Procédé selon la revendication 20, **caractérisé en ce qu'**on utilise en tant que monomères non ioniques des composés de formule générale 1 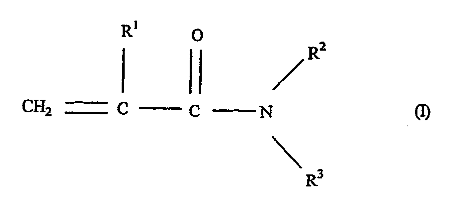 dans laquelle
R¹ représente un atome d'hydrogène ou un radical méthyle, et
R² et R³ représentent, indépendamment l'un de l'autre, un atome d'hydrogène, un radical alkyle ou hydroxyalkyle ayant de 1 à 5 atomes de carbone,
en tant que monomères cationiques, des composés de formule générale (II) 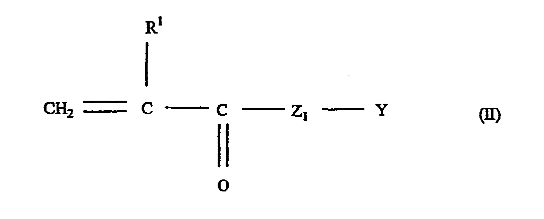 dans laquelle
R¹ représente un atome d'hydrogène ou un radical méthyle,
Z₁ représente O, NH ou NR₄, R₄ représentant un radi- cal alkyle ayant de 1 à 4 atomes de carbone,
Y représente l'un des groupes 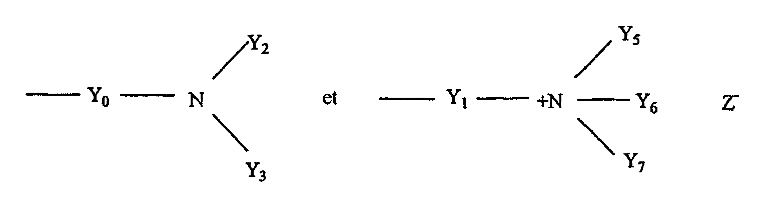
où
Y₀ et Y₁ représentent un radical alkylène ayant de 2 à 6 atomes de carbone, éventuellement substitué par des groupes hydroxy,
Y₂, Y₃, Y₄, Y₅, Y₆, Y₇ représentent chacun, indépen- damment les uns des autres, un radical alkyle ayant de 1 à 6 atomes de carbone,
Z⁻ représente un atome d'halogène, l'ion acétate ou SO₄CH₃⁻,
et en tant que monomères amphiphiles, des composés de formule générale (III) ou (IV) 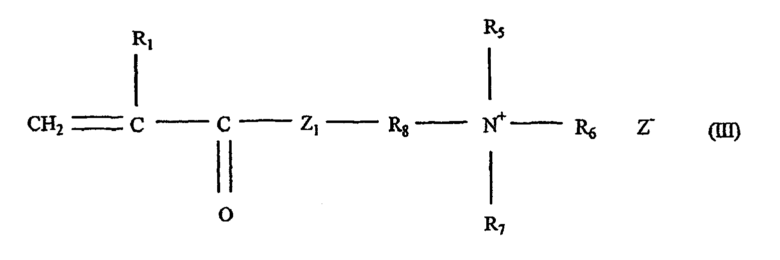 dans laquelle
Z₁ représente O, NH, NR₄, R₄ représentant un radical alkyle ayant de 1 à 4 atomes de carbone,
R₁ représente un atome d'hydrogène ou un radi- cal méthyle,
R₈ représente un radical alkylène ayant de 1 à 6 atomes de carbone,
R₅ et R₆ représentent, indépendamment l'un de l'autre, un radical alkyle ayant de 1 à 6 atomes de carbone,
R₇ représente un radical alkyle, aryle et/ou aralkyle ayant de 8 à 32 atomes de carbone, et
Z- représente un halogène, un pseudo-halogène, l'ion SO₄CH₃⁻ ou acétate,
ou 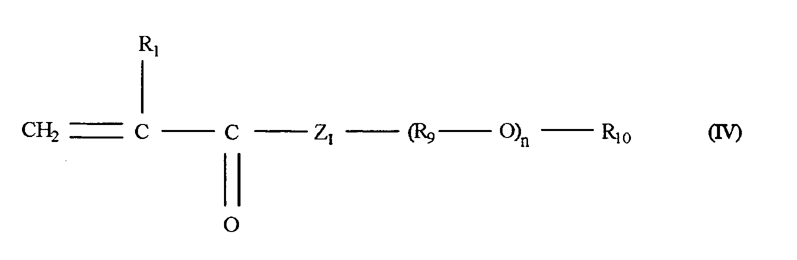 dans laquelle
Z₁ représente O, NH, NR₄, R₄ représentant un radical alkyle ayant de 1 à 4 atomes de carbone,
R₁ représente un atome d'hydrogène ou un radi- cal méthyle,
R₁₀ représente un atome d'hydrogène, un radical alkyle, aryle et/ou aralkyle ayant de 8 à 32 atomes de carbone,
R₉ représente un radical alkylène ayant de 2 à 6 atomes de carbone,
et
n représente un nombre entier allant de 1 à 50.

22. Procédé selon la revendication 20 ou 21, **caractérisé en ce que** le polymère A est constitué de 1 à 99 % en poids, de préférence de 20 à 80 % en poids de monomères cationiques.

23. Procédé selon les revendications 1 à 22, **caractérisé en ce que** le polymère A est présent en quantités de 5 à 60 % en poids, de préférence de 10 à 50 % en poids, par rapport à la dispersion totale.

24. Procédé selon les revendications 1 à 23, **caractérisé en ce que**, pour la polymérisation radicalaire, le système amorceur est ajouté en continu pendant tout le déroulement de la polymérisation.

25. Dispersion eau-dans-eau de polymère pouvant être obtenue selon une ou plusieurs des revendications 1 à 24.

26. Utilisation de la dispersion eau-dans-eau de polymère selon la revendication 25, en tant que floculant dans la sédimentation de matières solides, de préférence dans le traitement de l'eau et d'eaux résiduaires de fabrication ou l'épuration d'eaux résiduaires, dans l'obtention de matières premières, de préférence de charbon, d'aluminium ou de pétrole, en tant qu'adjuvant dans la fabrication du papier ou en tant que désémulsifiant dans la séparation de mélanges aqueux contenant des huiles et/ou des graisses.

27. Utilisation de la dispersion eau-dans-eau de polymère selon la revendication 25, en tant qu'épaississant.

28. Utilisation de la dispersion eau-dans-eau de polymère selon la revendication 25, en tant qu'agent de rétention et de déshydratation dans la fabrication du papier.

29. Utilisation de la dispersion eau-dans-eau de polymère selon la revendication 25, en tant qu'additif à un produit phytosanitaire ou conjointement avec d'autres substances biologiquement actives.

30. Utilisation de la dispersion eau-dans-eau de polymère selon la revendication 25, en tant qu'additif à un agent de lutte contre l'érosion.
